# FASCICULE DE BREVET EUROPEEN

(11) **EP 4 632 978 B1**
(45) Date de publication et mention de la délivrance du brevet: **21.10.2026**
(21) Numéro de dépôt: 25169510.2
(22) Date de dépôt: 09.04.2025
(51) Int. Cl.: H02H 3/08, H02H 3/02

(54) **PROCÉDÉ DE COMMANDE D'UN DISPOSITIF DE PROTECTION ÉLECTRIQUE, DISPOSITIF DE PROTECTION ÉLECTRIQUE ET INSTALLATION ÉLECTRIQUE ASSOCIÉS**
VERFAHREN ZUR STEUERUNG EINER ELEKTRISCHEN SCHUTZVORRICHTUNG, ELEKTRISCHE SCHUTZVORRICHTUNG UND ELEKTRISCHE ANLAGE DAFÜR
METHOD FOR CONTROLLING AN ELECTRICAL PROTECTION DEVICE, ASSOCIATED ELECTRICAL PROTECTION DEVICE AND ELECTRICAL INSTALLATION

(30) Priorité: 10.04.2024 FR 2403702
(43) Date de publication de la demande: 15.10.2025
(73) Titulaire: SCHNEIDER ELECTRIC INDUSTRIES SAS, 92500 Rueil-Malmaison (FR)
(72) Inventeur: HERAUD, Sébastien, 38100 GRENOBLE (FR); REYMOND, Bruno, 38430 MOIRANS (FR)
(74) Mandataire: Lavoix

(56) Documents cités:
- WO-A2-2014/177874
- US-A1- 2011 317 321
- US-A1- 2023 118 434

## Description

La présente invention concerne un procédé de commande d'un dispositif de protection électrique, ainsi qu'un dispositif de protection électrique et une installation électrique associés.

Afin de protéger une charge incluse dans une installation électrique contre des défauts électriques de type courts-circuits, il est connu d'installer un disjoncteur électromécanique en amont de la charge, de telle sorte que le disjoncteur électromécanique et la charge sont reliés l'un à l'autre, et d'installer en amont du disjoncteur électromécanique un dispositif de protection électrique supplémentaire. Des exemples de dispositifs de protection sont décrits dans US2023/118434A1, qui décrit un dispositif de protection électrique commandé pour éteindre rapidement un arc électrique formé entre ses contacts lors de son déclenchement, et dans WO2014/177874A2 et US2011/317321A1.

Le disjoncteur électromécanique comprend des contacts et un déclencheur, qui, lorsqu'il reçoit une énergie suffisante, est responsable de la séparation des contacts. Il est donc nécessaire d'attendre que le déclencheur ait reçu une énergie suffisante avant que le dispositif de protection interrompe le courant et isole le défaut par séparation des contacts. Or, cela génère une augmentation du courant circulant dans l'installation, due à la présence du court-circuit, ce qui impose des contraintes importantes à l'installation, notamment aux charges, ainsi qu'au dispositif de protection, qui doivent être capables de supporter un tel courant. Une solution connue est de déclencher le dispositif de protection lorsqu'un seuil de courant est atteint, afin de limiter les contraintes dans l'installation dues au courant, sans garantie que le disjoncteur électromécanique reçoive suffisamment d'énergie pour être déclenché.

Le but de l'invention est alors de proposer un procédé de commande d'un dispositif de protection électrique permettant de s'assurer du déclenchement de disjoncteur électromécanique, tout en limitant les contraintes dans l'installation causées par le courant en présence d'un court-circuit.

A cet effet, selon un premier aspect, l'invention a pour objet un procédé de commande d'un dispositif de protection électrique, configuré pour être connecté entre une source et un disjoncteur électromécanique, le dispositif comprenant :
- une cellule d'interruption, comprenant au moins un module de commutation, chaque module de commutation comprenant :
   ∘ au moins un élément semi-conducteur ; et
   ∘ un élément de limitation de tension, connecté en parallèle de l'au moins un élément semi-conducteur, l'élément de limitation de tension ayant une tension de limitation, la ou les tensions de limitation, seules et/ou sommées entre elles, formant un ou une pluralité de paliers distincts,
   chaque module de commutation étant configuré pour basculer entre une configuration passante, dans laquelle un courant circulant entre la source et le disjoncteur électromécanique circule dans le ou dans l'un des éléments semi-conducteurs, et une configuration bloquée, dans laquelle si le courant circule dans le module de commutation, il circule dans l'élément de limitation ;
- un capteur de courant, configuré pour mesurer une intensité du courant ;
- une unité de contrôle comprenant un module de traitement, et un module de commande de cellule, configuré pour commander chaque module de commutation dans la configuration passante et dans la configuration bloquée,
le procédé comprenant au moins les étapes suivantes :
a) mesure de l'intensité du courant par le capteur de courant ;
b) détection d'un défaut électrique de type court-circuit par le module de traitement, en fonction de l'intensité mesurée par le capteur de courant ;
Selon l'invention, le procédé comprend, en outre, les étapes successives suivantes :
c) lorsqu'un défaut électrique de type court-circuit est détecté par le module de traitement à l'étape b), lorsque l'intensité mesurée par le capteur est inférieure ou égale à un seuil d'intensité minimale et qu'une énergie de déclenchement reçue par le disjoncteur électromécanique est strictement inférieure à un seuil d'énergie, l'énergie de déclenchement étant calculée par le module de traitement en fonction de l'intensité mesurée par le capteur de courant, commander en configuration passante le ou les modules de commutation dont les tensions de limitation des éléments de limitation forment le palier d'écrêtage par le module de commande de cellule ;
d) lorsqu'un défaut électrique de type court-circuit est détecté par le module de traitement à l'étape b), lorsque l'intensité mesurée par le capteur atteint un seuil d'intensité maximale et que l'énergie de déclenchement calculée par le module de traitement est strictement inférieure au seuil d'énergie, commander en configuration bloquée le ou les modules de commutation dont les tensions de limitation des éléments de limitation forment le palier d'écrêtage par le module de commande de cellule ; et
e) lorsque l'énergie de déclenchement est supérieure ou égale au seuil d'énergie, commander en configuration bloquée chaque module de commutation par le module de commande de cellule, indépendamment de l'intensité mesurée par le capteur.

Grâce à l'invention, tant que le disjoncteur électromécanique n'a pas reçu une énergie suffisante pour se déclencher, le dispositif laisse le courant circuler. L'intensité du courant est cependant limitée, grâce aux modules de commutation, qui sont commandés en configuration bloquée lorsque l'intensité atteint un seuil d'intensité maximale, ce qui évite des intensités trop élevées et des risques d'endommagement pour le disjoncteur électromécanique, le dispositif de protection et la charge. De plus, grâce à la commande des modules de commutation en configuration passante lorsque l'intensité est inférieure ou égale au seuil d'intensité minimale, le dispositif assure qu'une intensité suffisante circule dans le disjoncteur électromécanique, assurant que ce dernier reçoive suffisament d'énergie pour se déclencher. Le maintien de l'intensité entre le seuil d'intensité minimale et le seuil d'intensité maximale assure également que le disjoncteur électromécanique reçoit de l'énergie de manière continue, sans se décharger, et donc assure un déclenchement le plus rapide possible. Ainsi, les contraintes dues à l'intensité du courant sont limitées, tout en s'assurant du déclenchement rapide du disjoncteur électromécanique.

Suivant d'autres aspects avantageux de l'invention, le procédé comprend une ou plusieurs des caractéristiques suivantes, prises isolément ou suivant toutes les combinaisons techniquement possibles :
- Le procédé comprend en outre les étapes successives suivantes :
   f) commander chaque module de commutation en configuration passante, alors que l'énergie de déclenchement est supérieure ou égale au seuil d'énergie et que chaque module de commutation a été commandé en configuration bloquée à l'étape e) ; et
   g) chaque module de commutation ayant été commandé en configuration passante à l'étape f), si un court-circuit est détecté alors qu'une durée décomptée à partir d'un moment où chaque module de commutation est commandé en configuration passante à l'étape g) est inférieure à une durée de test, commander chaque module de commutation en configuration bloquée.
- Le procédé comprend, en outre, l'étape suivante :
   h) lorsqu'un défaut électrique de type court-circuit est détecté par le module de traitement à l'étape b), commander en configuration ouverte un interrupteur mécanique, connecté en parallèle de la cellule d'interruption, l'interrupteur mécanique étant configuré pour basculer entre une configuration fermée, dans laquelle l'interrupteur mécanique conduit le courant, et une configuration ouverte, dans laquelle l'interrupteur mécanique ne conduit pas le courant, par un module de commande d'interrupteur mécanique inclus dans l'unité de contrôle.
- Le procédé comprend en outre l'étape suivante :
   i) commander l'interrupteur mécanique en configuration fermée si, lorsque la durée de l'étape g) est supérieure ou égale à la durée de test, aucun court-circuit n'a été détecté.
- Le dispositif comprend une pluralité de modules de commutation, connectés les uns aux autres, l'étape d) comprenant en outre une commande en configuration passante des modules de commutation dont les tensions de limitation des éléments de limitation ne forment pas le palier d'écrêtage, par le module de commande de cellule.

Selon un deuxième aspect, l'invention concerne également un dispositif de protection électrique, configuré pour être connecté entre une source et un disjoncteur électromécanique, le dispositif comprenant :
- une cellule d'interruption, comprenant au moins un module de commutation, chaque module de commutation comprenant :
   ∘ au moins un élément semi-conducteur; et
   ∘ un élément de limitation de tension, connecté en parallèle de l'au moins un élément semi-conducteur, l'élément de limitation de tension ayant une tension de limitation, la ou les tensions de limitation, seules et/ou sommées entre elles, formant un ou une pluralité de paliers distincts,
   chaque module de commutation étant configuré pour basculer entre une configuration passante, dans laquelle un courant circulant entre la source et le disjoncteur électromécanique circule dans le ou dans l'un des éléments semi-conducteurs, et une configuration bloquée, dans laquelle si le courant circule dans le module de commutation, il circule dans l'élément de limitation ;
- un capteur de courant, configuré pour mesurer une intensité du courant ;
- une unité de contrôle comprenant :
   ∘ un module de traitement configuré pour détecter un défaut électrique de type court-circuit en fonction de l'intensité mesurée par le capteur de courant et pour calculer une énergie de déclenchement reçue par le disjoncteur électromécanique, en fonction de l'intensité mesurée par le capteur de courant ; et
   ∘ un module de commande de cellule, configuré pour commander chaque module de commutation dans la configuration passante et dans la configuration bloquée,
le dispositif étant configuré pour mettre en œuvre le procédé décrit précédemment.

Suivant d'autres aspects avantageux de l'invention, le dispositif comprend une ou plusieurs des caractéristiques suivantes, prises isolément ou suivant toutes les combinaisons techniquement possibles :
- Chaque module de commutation comprend deux éléments semi-conducteurs qui sont unidirectionnels en courant et connectés l'un à l'autre en anti-série, et pour chaque élément semi-conducteur, une diode est connectée en anti-parallèle de l'élément semi-conducteur.
- La cellule d'interruption comprend deux branches de redressement, l'entrée et la sortie de la cellule d'interruption formant respectivement un point milieu de l'une des branches de redressement, chaque branche de redressement comprenant deux diodes disposées de part et d'autre du point milieu, connectées en anti-série l'une par rapport à l'autre ;
- les modules de commutation sont connectés en parallèle des branches de redressement ; et
- chaque module de commutation comprend un seul élément semi-conducteur connecté en parallèle de l'élément de limitation de tension.

- Le dispositif comprend un unique module de commutation, la tension de limitation de l'élément de limitation de tension du module de commutation formant alors le palier d'écrêtage.

Selon un troisième aspect, l'invention concerne également une installation électrique comprenant une source, une charge, un disjoncteur électromécanique, connecté entre la source et la charge, le disjoncteur électromécanique étant configuré pour se déclencher lorsqu'il reçoit une énergie de déclenchement supérieure ou égale à un seuil d'énergie, et un dispositif ainsi que décrit précédemment, connecté entre la source et le disjoncteur électromécanique.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma électrique d'une installation électrique selon un premier mode de réalisation de l'invention ;
- [Fig. 2] la figure 2 est un graphe de grandeurs caractéristiques de l'installation de la figure 1, en fonction du temps ;
- [Fig. 3] la figure 3 est un logigramme d'un procédé de commande d'un dispositif de protection appartenant à l'installation de la figure 1;
- [Fig. 4] la figure 4 est un schéma électrique d'une installation électrique selon un deuxième mode de réalisation de l'invention ;
- [Fig. 5] la figure 5 est un schéma électrique d'une cellule d'interruption de l'installation de la figure 4 ;
- [Fig. 6] la figure 6 est un graphe de grandeurs caractéristiques de l'installation des figures 4 et 5 en fonction;

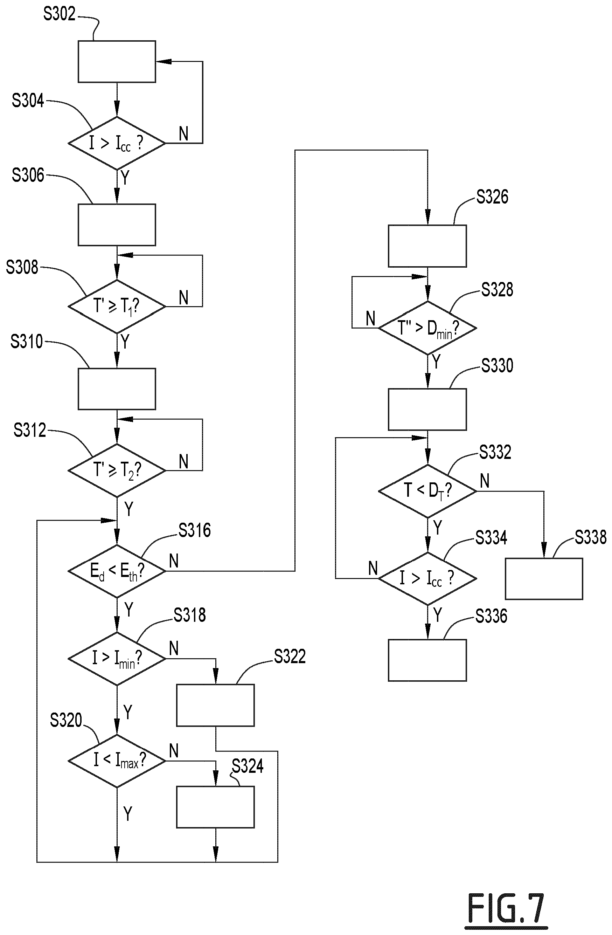

- [Fig. 7] la figure 7 est un logigramme d'un procédé de commande d'un dispositif de protection appartenant à l'installation des figures 4 et 5; et
- [Fig. 8] la figure 8 est un schéma électrique d'une cellule d'interruption appartenant à une installation selon un troisième mode de réalisation de l'invention.

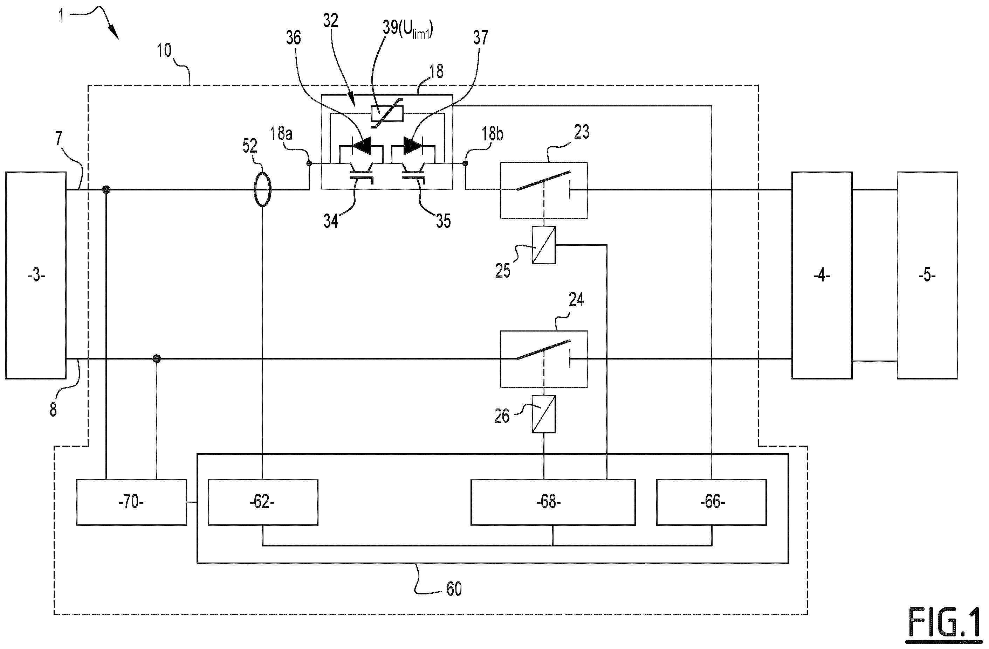

La figure 1 est un schéma d'une installation électrique 1 comprenant une source 3, un disjoncteur électromécanique 4 et une charge 5, électriquement reliés entre eux par un conducteur de phase 7 et un conducteur de neutre 8. La source 3 fournit de l'électricité et est, par exemple, un générateur électrique ou un réseau électrique, par exemple un réseau électrique de secteur.

La charge 5 est un appareil consommant de l'électricité, tel qu'un un appareil électrique domestique, un équipement industriel comme un moteur électrique, ou encore un serveur. Ainsi, un courant électrique, dit simplement courant par la suite, circule entre la source 3 et la charge 5 à travers le conducteur de phase 7, et revient à la source 3 par le conducteur de neutre 8.

Le disjoncteur électromécanique 4 est connecté entre la source et à la charge 5. Le disjoncteur électromécanique 4 comprend des contacts, ainsi qu'un déclencheur pouvant être une bobine, une palette magnétique, un dispositif électronique ou électromécanique, non représenté, et est configuré pour déclencher l'interruption du courant circulant depuis la source 3 vers la charge 5 lorsqu'un défaut électrique de type court-circuit est présent dans l'installation électrique 1.

Le courant est un courant basse tension ou moyenne tension, c'est-à-dire qu'une tension nominale Uₛ du courant, dite aussi tension du secteur ou tension réseau nominale, est inférieure à 52 000 V. Le courant est un courant alternatif ou, en variante, un courant continu.

L'installation électrique 1 comprend également un dispositif de protection électrique 10, également appelé dispositif par la suite, connecté entre la source 3 et le disjoncteur électromécanique 4. Le dispositif 10 est configuré pour basculer entre une configuration armée, dans laquelle le dispositif 10 conduit le courant circulant entre la source 3 et le disjoncteur électromécanique 4, et une configuration déclenchée, dans laquelle le dispositif 10 isole électriquement la source 3 du disjoncteur électromécanique 4. Le dispositif 10 a une tension U, exprimée en volts (V) et appliquée à ses bornes, entre les conducteurs 7 et 8. Dans le mode de réalisation de la figure 1, le dispositif 10 est un disjoncteur statique, aussi appelé SSCB, de l'anglais « Solid State Circuit Breaker ». Il comprend une cellule d'interruption 18 connectée en série au conducteur de phase 7 par une entrée 18a et une sortie 18b.

La cellule d'interruption 18 est configurée pour laisser passer ou pour interrompre le courant la traversant, ainsi qu'expliqué par la suite.

Le dispositif 10 comprend avantageusement un premier sectionneur 23 et, de manière optionnelle, un deuxième sectionneur 24, connectés respectivement au conducteur de phase 7 et au conducteur de neutre 8. En particulier, le sectionneur 23 est connecté au conducteur de phase 7 en série de la cellule d'interruption 18. Le sectionneur 24 est connecté en série au conducteur de neutre 8. Les sectionneurs 23 et 24 sont configurés pour basculer entre une configuration fermée dans laquelle les sectionneurs 23 et 24 conduisent le courant, et une configuration ouverte, dans laquelle les sectionneurs 23 et 24 ne conduisent pas le courant. Avantageusement, et ainsi que représenté sur la figure 1, le dispositif 10 comprend un actionneur 25 du premier sectionneur 23 et un actionneur 26 du deuxième sectionneur 24 qui, lorsqu'ils sont activés, interagissent respectivement avec le premier sectionneur 23 et le deuxième sectionneur 24 pour les faire basculer en configuration ouverte. Les actionneurs 25 et 26 sont, par exemple, des bobines et sont activés lorsqu'un courant circule dans les spires des bobines.

Les sectionneurs 23 et 24 sont configurés pour basculer en position ouverte en particulier lorsqu'aucun courant ne circule entre la source 3 et la charge 5, autrement dit, lorsque le courant a été interrompu par la cellule d'interruption 18.

La cellule d'interruption 18 comprend au moins un module de commutation, ici, un module de commutation 32. Le module de commutation 32 comprend au moins un élément semi-conducteur commandable en commutation, par exemple au moins un thyristor ou au moins un transistor, tel qu'un transistor à effet de champ, également appelé FET (de l'anglais Field Effect Transistor), un transistor à effet de champ à grille isolée, également appelé MOSFET (de l'anglais Metal Oxide Semiconductor Field Effect Transistor), un transistor bipolaire à grille isolée, également appelé IGBT (de l'anglais Insulated Gate Bipolar Transistor), ou une combinaison de ces différents éléments semi-conducteurs. Dans le mode de réalisation de la figure 1, la cellule d'interruption 18 comprend deux éléments semi-conducteurs 34 et 35. Les éléments semi-conducteurs 34 et 35 sont unidirectionnels en courant, et sont par exemple deux transistors de type IGBT. Le sens de conduction des transistors 34 et 35 est indiqué par une flèche sur chaque transistor 34, 35. Les transistors 34 et 35 sont connectés l'un à l'autre en anti-série, c'est-à-dire que les transistors 34 et 35 sont connectés en série mais tête-bêche, de sorte à ne pas conduire le courant en même temps. Deux diodes 36 et 37 sont connectées respectivement aux transistors 34 et 35. La diode 36 est connectée en anti-parallèle du transistor 34, c'est-à-dire que la diode 36 et le transistor 34 ne conduisent pas le courant électrique en même temps : si le transistor 34 est passant, la diode 36 est bloquée et inversement. Autrement dit, le transistor 34 et la diode 36 sont connectés en parallèle tête-bêche. Il en est de même pour le transistor 35 et la diode 37. Cette disposition permet à chaque module de commutation 32 et 42 de conduire du courant alternatif sans interruption à chaque changement de signe du courant.

Le module de commutation 32 comprend un élément de limitation de tension 39, également appelé élément de limitation. L'élément de limitation de tension 39 est connecté en parallèle d'un ensemble formé par les transistors 34 et 35, et est par exemple une varistance à oxyde métallique, ou MOV (de l'anglais Metal Oxyde Varistor), une diode transil ou un éclateur à gaz. L'élément de limitation de tension 39 a une tension de limitation Uₗᵢₘ₁, qui correspond à une tension à ses bornes lorsqu'il est traversé par le courant circulant entre la source 3 et la charge 5. La tension de limitation Uₗᵢₘ₁ est supérieure à la tension réseau nominale Uₛ, par exemple de l'ordre de 1,5 fois la tension réseau nominale Uₛ.

Le module de commutation 32 est configuré pour basculer entre une configuration passante et une configuration bloquée. Dans la configuration passante, le courant circule dans l'un des transistors 34 ou 35. Plus précisément, lorsque le courant traversant le dispositif 10 est alternatif, le courant circule dans le transistor 34 et dans la diode 37, puis lorsque le courant change de sens, dans le transistor 35 et dans la diode 36.

Dans la configuration bloquée, les transistors 34 et 35 ne conduisent pas le courant et, si du courant circule dans le module de commutation 32, il circule à travers l'élément de limitation de tension 39.

Ainsi, dans la configuration bloquée, une tension aux bornes du module de commutation 32 est la tension de limitation Uₗᵢₘ₁. Cette tension aux bornes du module de commutation 32 est alors également la tension U aux bornes du dispositif 10. Autrement dit, une contre-tension dont la valeur est celle de la tension de limitation Uₗᵢₘ₁ est appliquée aux bornes du dispositif 10.

La tension de limitation Uₗᵢₘ₁ forme un palier d'écrêtage Pₑ, qui est supérieur à la tension réseau nominale Uₛ.

Le dispositif de contrôle 10 comprend également un capteur de courant 52. Le capteur de courant 52 est configuré pour mesurer une intensité I du courant, exprimée en ampères (A), circulant entre la source 3 et la charge 5, et en particulier le courant circulant dans le conducteur de phase 7. Le capteur de courant 52 est, par exemple, un tore de Rogowski.

Le dispositif de contrôle 10 comprend une unité de contrôle 60, comprenant un module de traitement 62, connecté au capteur de courant 52 et configuré pour détecter un défaut électrique de type court-circuit en fonction de l'intensité I, mesurée par le capteur de courant 52. Dans la suite, on emploie le terme court-circuit pour désigner un défaut électrique de type court-circuit.

L'unité de contrôle 60 comprend également un module de commande de cellule 66 et, avantageusement, un module de commande de sectionneurs 68, connectés au module de traitement 62 et respectivement configurés pour commander la cellule d'interruption 18, plus précisément le module de commutation 32, et les sectionneurs 23 et 24.

Le module de commande de cellule 66, aussi appelé module de commande, est configuré pour commander le module de commutation 32 en configuration passante et en configuration bloquée, comme expliqué plus en détail par la suite, en particulier en actionnant la gâchette des transistors 34 et 35.

Le module de commande de sectionneurs 68 est avantageusement configuré pour actionner respectivement les actionneurs 25 et 26, afin de basculer les sectionneurs 23 et 24 en configuration ouverte.

L'unité de contrôle 60 est un circuit électronique conçu pour manipuler et/ou transformer des données représentées par des quantités électroniques ou physiques dans des registres de l'unité de contrôle 60 et/ou des mémoires, en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de contrôle 60 est réalisée sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

En variante non représentée, l'unité de contrôle 60 comprend une unité de traitement d'informations formée par exemple d'une mémoire et d'un processeur associé à la mémoire. Le module de traitement 62, le module de commande de cellule 66 et le module de commande de sectionneurs 68 sont réalisés chacun sous forme d'un logiciel, ou d'une brique logicielle, exécutable par le processeur. La mémoire de l'unité de contrôle 60 est alors apte à stocker un logiciel de traitement, un logiciel de commande de cellule et un logiciel de commande de sectionneurs. Le processeur est alors apte à exécuter chacun des logiciels parmi le logiciel de traitement, le logiciel de commande de cellule et le logiciel de commande de sectionneurs.

En variante non représentée, le module de traitement 62, le module de commande de cellule 66 et le module de commande de sectionneurs 68 sont réalisés chacun sous forme d'un composant logique programmable, tel qu'un FPGA (de l'anglais Field Programmable Gate Array), d'un circuit intégré, tel qu'un ASIC (de l'anglais Application Specific Integrated Circuit) ou encore sous la forme d'un composant analogique.

De manière avantageuse, le dispositif 10 comprend également un module d'alimentation 70, connecté aux conducteurs 7 et 8 et à l'unité de contrôle 60, afin d'alimenter en électricité l'unité de contrôle 60. En variante, le module d'alimentation 70 est connecté à un circuit externe, non relié aux conducteurs 7 et 8.

Lorsqu'un court-circuit est présent dans l'installation électrique 1, une intensité I du courant circulant entre la source 3 et la charge 5 augmente rapidement et de manière importante, par exemple de plusieurs milliers d'ampères par microseconde. L'intensité I du courant devient strictement supérieure à un seuil minimal de courant Iₘᵢₙ à partir duquel le déclencheur du disjoncteur électromécanique 4 reçoit une énergie de déclenchement E_{d}, exprimée en unités arbitraires (UA) proportionnelle au temps et au carré de l'intensité I. Lorsque l'énergie de déclenchement E_{d} est supérieure ou égale à un seuil d'énergie Eₜₕ, le déclencheur du disjoncteur électromécanique 4 provoque l'ouverture des contacts du disjoncteur électromécanique 4 afin d'interrompre le courant entre la source 3 et la charge 5, plus précisément entre le dispositif 10 et la charge 5. Autrement dit, lorsque l'énergie de déclenchement E_{d} est supérieure au seuil d'énergie Eₜₕ, le disjoncteur électromécanique 4 se déclenche.

L'énergie de déclenchement E_{d} est déterminée par le module de traitement 62 en fonction de l'intensité I mesurée par le capteur de courant 52.

Afin de limiter les contraintes dans l'installation électrique, l'intensité du courant I est limitée, à l'aide du dispositif 10, comme expliqué ci-dessous.

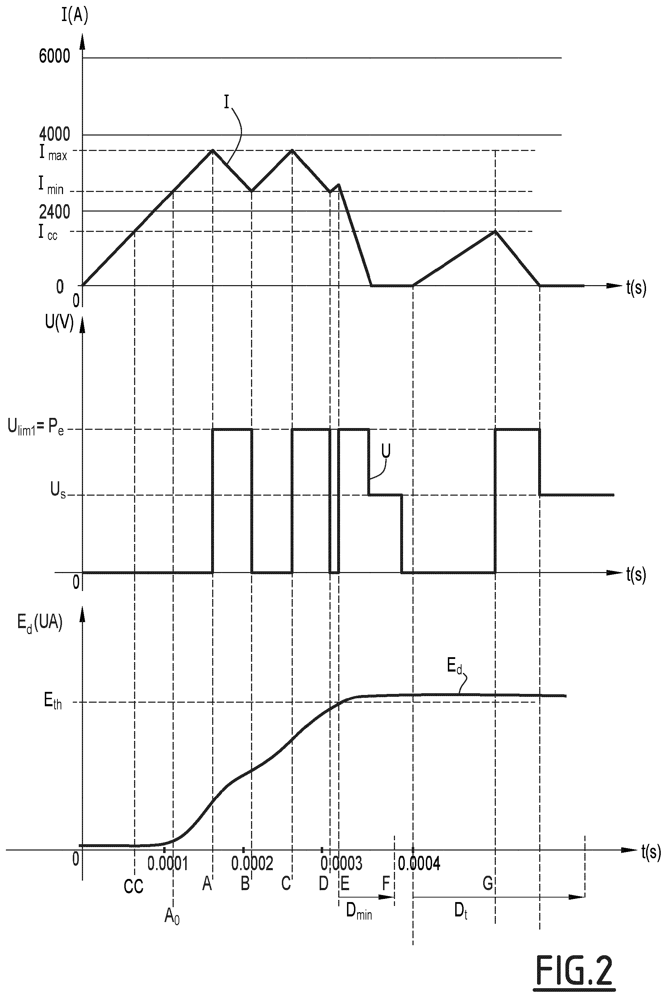

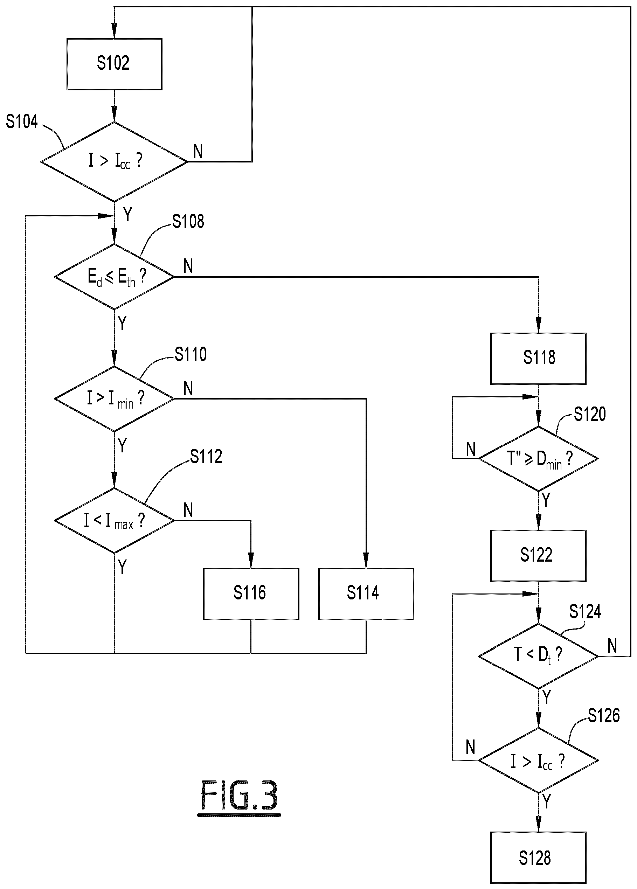

Un procédé de commande du dispositif 10 conforme à l'invention va maintenant être expliqué, en regard des figures 2 et 3.

Initialement, de manière avantageuse, le dispositif 10 est en configuration armée, c'est-à-dire que les sectionneurs 23 et 24 sont en configuration fermée et le module de commutation 32 est en configuration passante. Le courant circule de la source 3 vers le disjoncteur mécanique 4, en passant par le module de commutation 32.

Le capteur de courant 52 mesure l'intensité I du courant circulant dans le conducteur de phase 7, à l'étape S102.

L'unité de contrôle 60 reçoit la mesure de l'intensité I et détecte, via le module de traitement 62, si un court-circuit est présent entre la source 3 et la charge 5, à l'étape S104. Si un court-circuit n'est pas détecté, alors le capteur de courant 52 effectue à nouveau l'étape S102 et continue de mesurer l'intensité I du courant. Un fonctionnement itératif est alors mis en œuvre.

Le court-circuit est détecté en fonction de l'intensité I mesurée par le capteur de courant 52, et est par exemple détecté lorsque l'intensité I est strictement supérieure à un seuil prédéterminé, ici, lorsque l'intensité est strictement supérieure à un seuil de défaut I_{cc}. En variante, le court-circuit est détecté lorsqu'une dérivée de l'intensité I est strictement supérieure à un seuil prédéterminé, ou encore lorsqu'une combinaison de conditions sur l'intensité I et sa dérivée sont remplies. Dans l'exemple de la figure 2, un court-circuit est détecté à l'instant CC.

Si un court-circuit est détecté à l'étape S104, le courant n'est pas immédiatement interrompu, ce qui laisse l'intensité I croitre dans l'installation 1 afin de laisser le temps au disjoncteur 4 de recevoir l'énergie de déclenchement E_{d}.

Le module de traitement 62 commence un calcul de l'énergie de déclenchement E_{d} reçue par le disjoncteur électromécanique 4 dès que l'intensité I devient strictement supérieure au seuil d'intensité minimale Iₘᵢₙ, à partir duquel le disjoncteur électromécanique 4 reçoit l'énergie de déclenchement E_{d}. L'intensité I devient strictement supérieure au seuil d'intensité minimale Iₘᵢₙ à partir de l'instant A₀ sur la figure 2.

En variante non représentée, l'intensité minimale Iₘᵢₙ est inférieure à l'intensité de défaut I_{cc}. Dans ce cas, le calcul de l'énergie de déclenchement E_{d} est commencé avant que le court-circuit soit détecté à l'étape 104.

Lors d'une étape S108, le module de traitement 62 compare l'énergie de déclenchement E_{d} calculée au seuil d'énergie Eₜₕ. Le seuil d'énergie Eₜₕ est avantageusement indiqué par le constructeur du dispositif 10, ou par l'installateur du dispositif 10, qui indique ainsi le seuil d'énergie Eₜₕ correspondant au disjoncteur électromécanique 4 en aval du dispositif 10.

Si l'énergie de déclenchement E_{d} est strictement inférieure au seuil d'énergie Eₜₕ, ce qui est le cas entre les instants A et E de la figure 2, le module de traitement 62 effectue une étape S110 dans laquelle il compare l'intensité I au seuil d'intensité minimale Iₘᵢₙ. Si l'intensité I est strictement supérieure au seuil d'intensité minimale Iₘᵢₙ, ainsi que visible à la figure 2 entre les instants A et B, le module de traitement 62 compare l'intensité I au seuil d'intensité maximale Iₘₐₓ à l'étape S112. Si l'intensité I est strictement inférieure au seuil d'intensité maximale Iₘₐₓ, le module de traitement 62 effectue à nouveau l'étape S108. Un fonctionnement itératif est alors mis en œuvre.

Comme visible sur la figure 2, à l'instant A, l'énergie de déclenchement E_{d} est strictement inférieure au seuil d'énergie Eₜₕ et l'intensité I a augmenté jusqu'à devenir égale au seuil d'intensité maximale Iₘₐₓ. L'unité de contrôle 60 commande le module de commutation 32 dans la configuration bloquée via le module de commande de cellule 66 à l'étape S116, ce qui correspond à l'instant A de la figure 2. La tension U aux bornes du dispositif 10 est alors égale au palier d'écrêtage Pₑ, lui-même égal à la tension de limitation Uₗᵢₘ₁.

Le passage du courant dans l'élément de limitation de tension 39 permet de limiter un accroissement de l'intensité I causé par le court-circuit, selon la formule suivante : $TA ≅ 1 - \frac{U}{{U}_{s}}$ avec :
- TA le taux de croissance de l'intensité I ;
- U la tension aux bornes du dispositif 10 ; et
- Uₛ la tension réseau nominale.

En pratique, les tensions induites par la résistance des conducteurs 7 et 8, et par le défaut sont considérées négligeables, et le taux d'accroissement TA est ainsi considéré égal à $1 - \frac{U}{{U}_{s}}$.

La tension U étant ici égale à la tension de limitation Uₗᵢₘ₁ qui est supérieure à la tension réseau nominale Uₛ, l'intensité I diminue jusqu'à atteindre le seuil d'intensité minimale Iₘᵢₙ, comme visible à la figure 2 entre les instants A et B.

Comme visible à la figure 2, à l'instant B, l'énergie de déclenchement E_{d} est strictement inférieure au seuil d'énergie Eₜₕ et l'intensité I a diminué jusqu'à devenir égale au seuil d'intensité minimale Iₘᵢₙ. En variante non représentée, à l'instant B, l'intensité I a diminué jusqu'à devenir égale au seuil d'intensité minimale Iₘᵢₙ. Ainsi, à partir de l'instant B et suite à l'étape S110, une étape S114 est effectuée, lors de laquelle le module de commande 66 commande le module de commutation 32 en configuration passante. La tension U aux bornes du dispositif 10 chute brutalement et devient sensiblement nulle en même l'intensité I augmente, jusqu'à atteindre à nouveau le seuil d'intensité maximale Iₘₐₓ, ce qui correspond à l'instant C sur la figure 2. Le module de traitement 62 effectue alors à nouveau les étapes S108, S110 et S112, et détermine que l'intensité I a atteint le seuil d'intensité maximale Iₘₐₓ. Le module de commande 66 commande alors le module de commutation 32 dans l'état bloqué à l'étape S116. La tension U aux bornes du dispositif 10 devient à nouveau égale à la tension de limitation Uₗᵢₘ₁ et l'intensité I diminue.

L'intensité I mesurée par le capteur 52 diminue jusqu'à devenir égale au seuil minimal de courant Iₘᵢₙ, ce correspond à l'instant D de la figure 2. Le module de commande de cellule 66 effectue à nouveau l'étape S114 et commande le module de commutation 32 dans l'état passant. La tension U devient à nouveau nulle et l'intensité I augmente à nouveau.

En variante non représentée, à l'instant D, l'intensité I a diminué jusqu'à devenir strictement inférieure au seuil d'intensité minimale Iₘᵢₙ.

Le maintien de l'intensité I entre le seuil d'intensité minimale Iₘᵢₙ et le seuil d'intensité maximale Iₘₐₓ continue tant que l'énergie de déclenchement E_{d} est strictement inférieure au seuil d'énergie Eₜₕ. Lorsque l'énergie de déclenchement E_{d} devient supérieure ou égale au seuil d'énergie Eₜₕ, ce qui correspond à l'instant E de la figure 2, le disjoncteur électromécanique 4 se déclenche. Le module de traitement 62 effectue l'étape S118 suite à l'étape S108. Lors de l'étape S118, le module de commutation 32 est commandé par le module de commande de cellule 66 en configuration bloquée, indépendamment de l'intensité I mesurée par le capteur 52. Ainsi, le courant est interrompu à la fois par le disjoncteur électromécanique 4 et par le dispositif 10. La tension U devient égale à la tension de limitation Uₗᵢₘ₁ et l'intensité I diminue jusqu'à devenir nulle. Lorsque l'intensité I est devenue nulle, la tension U aux bornes du dispositif 10 devient égale à la tension nominale du réseau Uₛ.

De manière avantageuse, et ainsi que représenté à la figure 2, alors que l'énergie de déclenchement E_{d} est supérieure ou égale au seuil d'énergie Eₜₕ et que la commande du module de commutation 32 en configuration bloquée à l'étape S118 a été effectuée, une séquence de reconduction est mise en œuvre.

La séquence de reconduction comprend l'étape S120, dans laquelle le module de traitement 62 attend qu'une durée minimale Dₘᵢₙ, calculée à partir du moment où le module de commande 66 commande le module de commutation 32 en configuration bloquée à l'étape S118, soit écoulée. Pour cela, lors de l'étape S328, le module de traitement 62 compare une durée T", mesurée à partir de l'instant E, et la durée Dₘᵢₙ. Lorsque la durée Dₘᵢₙ est écoulée, c'est-à-dire, lorsque la durée T" est supérieure ou égale à Dₘᵢₙ, le module de commande 66 commande le module de commutation 32 en configuration passante lors de l'étape S122, correspondant à l'instant F de la figure 2. Le module de traitement 62 compare une durée T, mesurée à partir de la commande du module de commutation 32 en configuration passante à l'étape S122, à une durée de test Dₜ, lors d'une étape S124. Si la durée T est strictement inférieure à la durée de test Dₜ, autrement dit, si la durée de test Dₜ n'est pas écoulée, le module de traitement 62 détecte si un court-circuit est toujours présent, à l'étape S126. Dans l'exemple des figures 2 et 3, le module de traitement 62 détecte un court-circuit à l'étape S126 si l'intensité I est strictement supérieure à une intensité de défaut I_{cc}. Si le module de traitement 62 détecte un court-circuit alors que la durée T est strictement inférieure à la durée de test Dₜ, cela signifie que, malgré le déclenchement du disjoncteur électromécanique 4, le court-circuit n'a pas été isolé. Cela est dû par exemple, au fait que le court-circuit est localisé entre le disjoncteur électromécanique 4 et le dispositif 10. Le module de commande de cellule 66 commande alors le module de commutation 32 en configuration bloquée à l'étape S128, correspondant à l'instant G de la figure 2. La tension U aux bornes du dispositif est alors égale à la tension de limitation Uₗᵢₘ₁, jusqu'à ce que l'intensité I devienne nulle. La tension U devient alors égale à la tension réseau nominale Uₛ.

Avantageusement, lorsque l'intensité I est devenue nulle suite à l'étape S128, le module de commande de sectionneur 68 active les actionneurs 25 et 26, afin de basculer les sectionneurs 23 et 24 en configuration ouverte. Le dispositif 10 est alors en configuration déclenchée.

Ainsi qu'il ressort des explications qui précèdent, les sectionneurs 23 et 24 basculent en configuration ouverte seulement une fois le courant interrompu et servent à isoler galvaniquement la source 3 et la charge 5, mais ne participent pas à l'interruption du courant en tant que telle.

Si le module de traitement 62 ne détecte pas de court-circuit à l'étape S126, alors le module de traitement 62 effectue à nouveau l'étape S124 et un fonctionnement itératif est mis en œuvre. Si la durée T est supérieure ou égale à la durée de test Dₜ, autrement dit, si la durée de test Dₜ est écoulée, aucun court-circuit n'ayant été détecté, cela signifie que le déclenchement du disjoncteur électromécanique 4 a permis d'isoler le court-circuit. Le module de commande de cellule 66 maintient alors le module de commutation 32 en configuration passante et le dispositif 10 reprend son fonctionnement normal et effectue de nouveau l'étape S102.

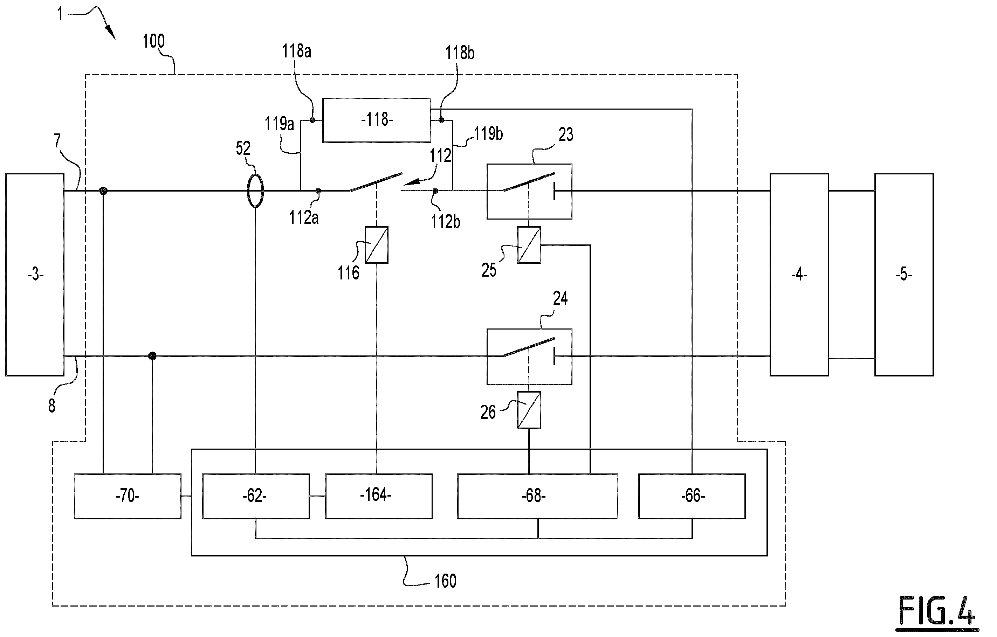

La figure 4 représente une installation électrique 1, qui diffère de l'installation électrique de la figure 1 par son dispositif 100, qui remplace le dispositif 10. Les éléments du dispositif 100 identiques à ceux du dispositif 10 ou identifiés dans la figure 4 par les mêmes signes de référence sont similaires, au moins fonctionnellement, à ceux du dispositif 10 et ne sont pas décrits en détail.

Le dispositif 100 est un disjoncteur hybride, et comprend un interrupteur mécanique 112, également connu sous le nom d'interrupteur de bypass, ou d'interrupteur mécanique rapide, également appelé FMS (de l'anglais Fast Mechanical Switch). L'interrupteur mécanique 112 est connecté en série au conducteur de phase 7, par une entrée 112a et une sortie 112b, et est configuré pour basculer entre une configuration fermée, dans laquelle il conduit le courant circulant entre la source 3 et la charge 5, et une configuration ouverte, dans laquelle il ne conduit pas le courant. Dans la figure 4, l'interrupteur mécanique 112 est représenté en configuration ouverte. Le dispositif 100 comprend avantageusement un actionneur 116 qui, lorsqu'il est activé, bascule l'interrupteur mécanique 112 en configuration ouverte.

Le dispositif 100 comprend une cellule d'interruption 118, connectée en parallèle de l'interrupteur mécanique 112, de telle sorte que l'entrée 112a et la sortie 112b de l'interrupteur mécanique 112 sont connectées respectivement à une entrée 118a et à une sortie 118b de la cellule d'interruption 118. Plus spécifiquement, l'entrée 112a de l'interrupteur mécanique 112 et l'entrée 118a de la cellule d'interruption 118 sont connectées par une liaison électrique 119a, qui est non interruptible et la sortie 112b de l'interrupteur mécanique 112 est connectée à la sortie 118b de la cellule d'interruption 118 par une liaison électrique 119b, qui est également non interruptible. Autrement dit, les liaisons électriques 119a et 119b sont chacune un câble ou un fil électrique ; aucune des liaisons électriques 119a et 119b ne comprennent d'interrupteur ou plus généralement de moyen d'interruption du courant électrique. La cellule d'interruption 118 est configurée pour laisser passer ou pour interrompre le courant la traversant, ainsi qu'expliqué par la suite.

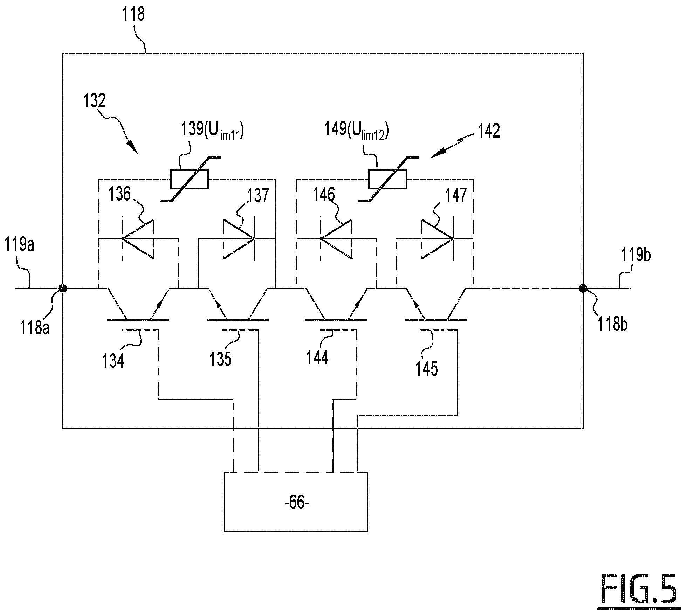

La cellule d'interruption 118 comprend N modules de commutation ; par exemple N est égal à 2 dans l'exemple des figures. La cellule d'interruption 118 comprend deux modules de commutation 132 et 142, ainsi que visible à la figure 5. En variante, les modules de commutation sont au nombre de trois ou plus, ainsi que symbolisé par la ligne en pointillés à la figure 5.

Les modules de commutation 132 et 142 sont connectés en série les uns aux autres.

Dans l'exemple de la figure 5, le module de commutation 132 est similaire, au moins fonctionnellement, au module de commutation 32 et comprend à ce titre deux transistors 134, 135 connectés en anti-série, deux diodes 136 et 137 respectivement connectées en anti-parallèle des transistors 134 et 135, et un élément de limitation 139, ayant une tension de limitation Uₗᵢₘ₁₁. Les transistors 144, 145 et les diodes 146 et 147 du module de commutation 142 sont respectivement similaires, au moins fonctionnellement, aux transistors 134, 135 et aux diodes 136 et 137 du module de commutation 132. En particulier, les transistors 134, 144, 135 et 145 sont dans l'exemple de la figure 5, des transistors unidirectionnels en courant, dont le sens est indiqué par une flèche sur chaque transistor. Le module de commutation 142 comprend un élément de limitation 149, connecté en parallèle d'un ensemble formé par les transistors 144 et 145 et a une tension de limitation Uₗᵢₘ₁₂, qui est différente de la tension de limitation Uₗᵢₘ₁₁.

La tension de limitation Uₗᵢₘ₁₁ est par exemple égale à 0,5 fois Uₛ et la tension de limitation Uₗᵢₘ₁₂ est par exemple égale à 1,5 fois Uₛ.

Ainsi, dans la configuration bloquée, les tensions aux bornes des modules de commutation 132 et 142 sont respectivement la tension de limitation Uₗᵢₘ₁₁ et la tension de limitation Uₗᵢₘ₁₂.

Les tensions de limitation Uₗᵢₘ₁₁ et Uₗᵢₘ₁₂ forment au moins 2^{N}-1 paliers, distincts les uns des autres. Ici, le nombre Np de paliers de commutation est égal à Np= 2^{N}-1, où N est le nombre de modules de commutation. Les paliers sont formés par les tensions de limitation Uₗᵢₘ₁₁ et Uₗᵢₘ₁₂ prises seules, ou sommées l'une à l'autre. La liste des paliers obtenus est représentée dans la table ci-dessous. Pour N=2 modules de commutation, trois paliers distincts P1, P2, P3 sont obtenus, avec 3 = 2²-1. Ici, P1 est le palier avec la valeur la plus faible, égale à Uₗᵢₘ₁₁ qui vaut par exemple 0,5Uₛ, P2 est supérieur à P1, et a une valeur égale à Uₗᵢₘ₁₂ qui vaut par exemple 1,5Uₛ, et P3 est supérieur à P2, avec une valeur égale la somme de Uₗᵢₘ₁₁ et Uₗᵢₘ₁₂, par exemple 2Uₛ.

**[Table 1]**

| Palier | Valeur |
|---|---|
| P1 | Uₗᵢₘ₁₁ |
| P2 | Uₗᵢₘ₁₂ |
| P3 | Uₗᵢₘ₁₁ + Uₗᵢₘ₁₂ |

Le palier P2 est le plus petit palier supérieur à la tension réseau nominale, et est appelé le palier d'écrêtage Pₑ.

Le dispositif de contrôle 100 comprend une unité de contrôle 160, qui diffère de l'unité de contrôle 60 en ce qu'elle comprend en outre un module de commande d'interrupteur mécanique 164.

Un procédé de fonctionnement du dispositif 100 va maintenant être expliqué, en regard des figures 3 et 4.

Initialement, de manière avantageuse, le dispositif 100 est en configuration armée, c'est-à-dire que les sectionneurs 23 et 24 sont en configuration fermée, l'interrupteur mécanique 112 est en configuration fermée, et les transistors 134, 135, 144 et 145 sont passants. A cause d'une résistance interne inférieure à celle des transistors 134, 135, 144 et 145, l'interrupteur mécanique 112 conduit l'ensemble du courant électrique circulant dans le dispositif 100. Une tension U aux bornes du dispositif 100 est nulle, ou sensiblement nulle.

Le capteur de courant 52 mesure l'intensité I du courant circulant dans le conducteur de phase 7, à l'étape S302.

L'unité de contrôle 160 reçoit la mesure de l'intensité I et détecte, via le module de traitement 62, si un court-circuit est présent entre la source 3 et la charge 5, à l'étape S304.

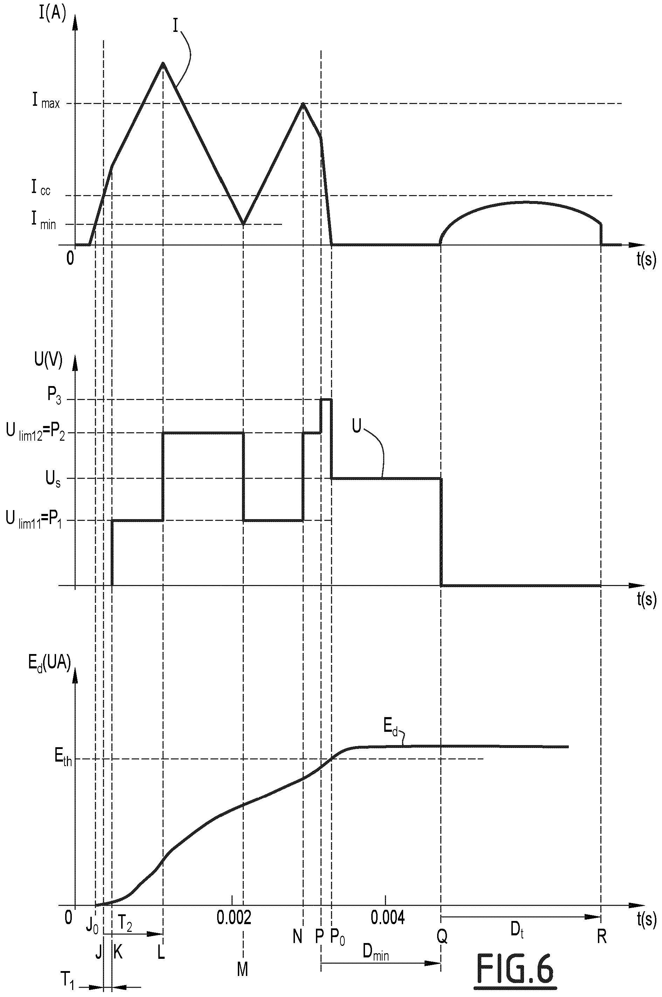

Dans l'exemple de la figure 6, un court-circuit est détecté lorsque l'intensité I est strictement supérieure à l'intensité de défaut I_{cc}.

Si un court-circuit n'est pas détecté, alors le capteur de courant 52 effectue à nouveau l'étape S304 et continue de mesurer l'intensité I du courant. Un fonctionnement itératif est alors mis en œuvre.

Si un court-circuit est détecté, alors l'unité de contrôle 160 commande l'interrupteur mécanique 112 en basculement dans la configuration ouverte, via le module de commande d'interrupteur mécanique 164, lors de l'étape S306. L'ouverture de l'interrupteur mécanique 112 correspond à l'instant J sur la figure 6. De plus, si un court-circuit est détecté, le module de traitement 62 commence un calcul de l'énergie de déclenchement E_{d} reçue par le disjoncteur électromécanique 4. En effet, le seuil de défaut I_{cc} étant supérieur au seuil d'intensité minimale Iₘᵢₙ, le déclencheur du disjoncteur électromécanique 4 reçoit l'énergie de déclenchement E_{d}.

En variante, le module de traitement 62 commence le calcul de l'énergie de déclenchement E_{d} dès que l'intensité I dépasse le seuil d'intensité minimale Iₘᵢₙ, ce qui correspond à l'instant J₀ sur la figure 6, et avant que le court-circuit soit détecté, c'est-à-dire avant l'étape S304.

Lorsque l'interrupteur mécanique 112 est en configuration ouverte, le courant électrique est transféré de l'interrupteur mécanique 112 à la cellule d'interruption 118. Cependant, l'ouverture de l'interrupteur mécanique 112 génère un arc électrique et une ionisation du milieu entre des contacts de l'interrupteur mécanique 112. Cela diminue une tenue diélectrique de l'interrupteur mécanique 112. Ainsi, avant de réduire ou d'interrompre le courant circulant entre la source 3 et la charge 5, il est nécessaire d'attendre un rétablissement d'une tenue diélectrique de l'interrupteur mécanique 112 suffisante faute de quoi un re-claquage peut survenir aux bornes de l'interrupteur mécanique 112, c'est-à-dire une réapparition d'un arc électrique entre des contacts de l'interrupteur mécanique 112, alors que ce dernier est en configuration ouverte, ce qui entraîne l'endommagement de l'interrupteur mécanique 112. Le dispositif 100 ne pourra alors ni réduire ni interrompre le courant.

La tenue diélectrique de l'interrupteur mécanique 112 augmente avec le temps, jusqu'à devenir supérieure à un ou plusieurs paliers P1, P2, P3. Dans l'exemple décrit ici, P1 est le palier le plus petit. Ainsi, la tenue diélectrique de l'interrupteur mécanique 12 devient supérieure ou égale au palier P1 tout en étant inférieure aux paliers P2 et P3. P1 est alors le plus grand palier inférieur ou égal à la tenue diélectrique de l'interrupteur mécanique 112.

De préférence, la durée nécessaire entre le moment où l'interrupteur mécanique 12 bascule en configuration ouverte et le moment où la tenue diélectrique de l'interrupteur mécanique 12 devient égale au palier P1 est égale à un premier seuil d'attente T₁.

L'unité de traitement 62 compare une durée d'attente T' à un premier seuil d'attente T₁ à l'étape S308. Tant que la durée d'attente T' est inférieure au premier seuil d'attente T₁, l'unité de traitement 62 continue d'effectuer l'étape S308. Un fonctionnement itératif est alors mis en œuvre.

Lorsque la durée d'attente T' est supérieure ou égale au premier seuil d'attente T₁, la tenue diélectrique de l'interrupteur mécanique 12 est égale ou supérieure au palier P1. De manière avantageuse, le module de commande de cellule 166 commande le module de commutation 132 en configuration bloquée à l'étape S310, qui correspond à l'instant K sur la figure 6, et les autres modules de commutation, ici le module de commutation 142, en configuration passante. Les transistors 134 et 135 sont bloqués et ne conduisent pas le courant, qui circule alors dans l'élément de limitation de tension 139 et dans le module de commutation 142. La tension U aux bornes du dispositif 100, et donc aux bornes de l'interrupteur mécanique 112 est alors égale à la tension de limitation Uₗᵢₘ₁₁. Le passage du courant dans l'élément de limitation de tension 139 permet de limiter un accroissement de l'intensité I causé par le court-circuit et le palier P1 est également appelé palier de limitation. Les étapes S308 et S310 permettent de limiter l'accroissement de l'intensité I le plus tôt possible, en appliquant une tension égale au palier P1, dès que la tenue diélectrique de l'interrupteur mécanique 112 le permet.

La tenue diélectrique de l'interrupteur mécanique 112 continue de croître, et devient égale puis supérieure au palier P2. De préférence, la durée entre l'instant où l'interrupteur mécanique 12 bascule en configuration ouverte et l'instant où la tenue diélectrique de l'interrupteur mécanique 12 devient égale au palier P2 est égale à un deuxième seuil d'attente T₂.

L'unité de traitement 62 compare la durée d'attente T' au deuxième seuil d'attente T₂ à l'étape S312. Tant que la durée d'attente T' est inférieure au deuxième seuil d'attente T₂, l'unité de traitement 62 continue d'effectuer l'étape S312. Un fonctionnement itératif est alors mis en œuvre.

Lorsque la durée d'attente T' est supérieure ou égale au deuxième seuil d'attente T₂, ce qui est le cas à l'instant L, alors lors d'une étape S316, le module de traitement 62 compare l'énergie de déclenchement E_{d} calculée au seuil d'énergie Eₜₕ.

Si l'énergie de déclenchement E_{d} est strictement inférieure au seuil d'énergie Eₜₕ, le module de traitement 62 effectue une étape S318 dans laquelle il compare l'intensité I au seuil d'intensité minimale Iₘᵢₙ. Si l'intensité I est strictement supérieure au seuil d'intensité minimale Iₘᵢₙ, le module de traitement 62 compare l'intensité I au seuil d'intensité maximale Iₘₐₓ à l'étape S320. Si l'intensité I est strictement inférieure au seuil d'intensité maximale Iₘₐₓ, le module de traitement 62 effectue à nouveau l'étape S316. A l'instant L, l'énergie de déclenchement E_{d} est strictement inférieure au seuil d'énergie Eₜₕ et l'intensité I est supérieure au seuil d'intensité maximale Iₘₐₓ. Le module de commande 66 commande alors le module de commutation 142 en configuration bloquée et le module de commutation 132 en configuration passante à l'étape S324. Autrement dit, le module de commande de cellule 66 commande le module de commutation 142 dont la tension de limitation Uₗᵢₘ₁₂ de l'élément de limitation 149 forme le palier d'écrêtage Pₑ, et commande les modules de commutation dont les tensions de limitation ne forment pas le palier d'écrêtage Pₑ en configuration passante. Les transistors 146 et 147 sont bloqués et ne conduisent pas le courant, qui circule alors dans l'élément de limitation de tension 149 et dans le module de commutation 132. La tension U aux bornes du dispositif 100, et donc aux bornes de l'interrupteur mécanique 112 est alors égale au palier P2, égal à la tension de limitation Uₗᵢₘ₁₂, autrement dit, au palier d'écrêtage Pₑ. Le module de traitement 62 effectue à nouveau l'étape S316 et un fonctionnement itératif est mis en œuvre.

Si l'énergie de déclenchement E_{d} est strictement inférieure au seuil d'énergie Eₜₕ, ce qui est le cas entre les instants L et P de la figure 6, le module de traitement 62 effectue l'étape S318 dans laquelle il compare l'intensité I au seuil d'intensité minimale Iₘᵢₙ. Si l'intensité I est strictement supérieure au seuil d'intensité minimale Iₘᵢₙ, ce qui est le cas entre les instants L et M de la figure 6, le module de traitement 62 compare l'intensité I au seuil d'intensité maximale Iₘₐₓ à l'étape S320. Si l'intensité I est strictement inférieure au seuil d'intensité maximale Iₘₐₓ, le module de traitement 62 effectue à nouveau l'étape S316. Un fonctionnement itératif est alors mis en œuvre. Les étapes S316, S318 et S320 sont respectivement similaires aux étapes S108, S110 et S112 du premier mode de réalisation.

Comme visible à la figure 6, à l'instant M, l'énergie de déclenchement E_{d} est strictement inférieure au seuil d'énergie Eₜₕ et l'intensité I a diminué jusqu'à devenir égale au seuil d'intensité minimale Iₘᵢₙ. Ainsi, suite à l'étape S318, une étape S322 est effectuée, lors de laquelle le module de commande 66 commande le module de commutation 142 en configuration passante et, de manière avantageuse, le module de commutation 132 en configuration bloquée. La tension U aux bornes du dispositif 10 devient égale au palier P1, autrement dit, au palier de limitation, et l'intensité I augmente, jusqu'à atteindre le seuil d'intensité maximale Iₘₐₓ, correspondant à l'instant N sur la figure 6.

Le module de traitement 62 effectue alors les étapes S316, S318 et S320, et détermine que l'intensité I est supérieure ou égale au seuil d'intensité maximale Iₘₐₓ. Le module de commande 66 commande alors le module de commutation 142 en configuration bloquée et le module de commutation 132 en configuration passante à l'étape S324. Autrement dit, le module de commande 66 commande en configuration bloquée le module de commutation 142 dont la tension de limitation Uₗᵢₘ₂₁ de l'élément de limitation 149 forme le palier d'écrêtage Pₑ, et commande en configuration passante le module de commutation 132 dont la tension de limitation Uₗᵢₘ₁₁ de l'élément de limitation 139 ne forme pas le palier d'écrêtage Pₑ. La tension U aux bornes du dispositif 10 devient à nouveau égale à la tension de limitation Uₗᵢₘ₁₂, autrement dit, au palier d'écrêtage Pₑ, et l'intensité I diminue.

Le maintien de l'intensité I entre le seuil d'intensité minimale Iₘᵢₙ et le seuil d'intensité maximale Iₘₐₓ continue tant que l'énergie de déclenchement E_{d} est strictement inférieure au seuil d'énergie Eₜₕ. Ainsi, commander le module de commutation 132 en configuration bloquée à l'étape S322 permet de limiter l'accroissement de l'intensité I et limite le nombre de commandes des modules de commutation 132 et 142.

Lorsque l'énergie de déclenchement E_{d} devient supérieure ou égale au seuil d'énergie Eₜₕ, ce qui correspond à l'instant P de la figure 6, le disjoncteur électromécanique 4 se déclenche. Le module de traitement 62 effectue l'étape S326 suite à l'étape S316. Lors de l'étape S326, la tenue diélectrique de l'interrupteur mécanique 112 est supérieure au palier P3, et chaque module de commutation 132, 142 est commandé par le module de commande de cellule 66 en configuration bloquée, indépendamment de l'intensité I.

Ainsi, le courant est interrompu à la fois par le disjoncteur électromécanique 4 et par le dispositif 10. La tension U devient égale au palier P3 et l'intensité I diminue jusqu'à devenir nulle, à un instant P₀ qui suit l'instant P. Lorsque l'intensité I est devenue nulle à l'instant P₀, la tension U aux bornes du dispositif 10 devient égale à la tension nominale du réseau Uₛ.

Dans l'exemple des figures 4 à 6, commander chaque module de commutation 132, 142 à l'étape S326 permet d'accélérer la diminution de l'intensité I, par rapport à une variante où seuls les modules de commutation dont les tensions de limitation forment le palier d'écrêtage Pₑ, ici le module de commutation 142, sont utilisés.

De manière avantageuse, et ainsi que représenté à la figure 6, suite à la commande de tous les modules de commutation en configuration bloquée à l'étape S326, une séquence de reconduction est mise en œuvre, similaire à la séquence de reconduction décrite pour le dispositif 10.

La séquence de reconduction comprend l'étape S328, dans laquelle le module de traitement 62 attend que la durée minimale Dₘᵢₙ, calculée à partir de la commande des modules de commutation 132 et 142 en configuration bloquée, qui a lieu à l'étape S326, soit écoulée. Pour cela, lors de l'étape S328, le module de traitement 62 compare une durée T", mesurée à partir de l'instant P et la durée Dₘᵢₙ. Lorsque la durée Dₘᵢₙ est écoulée, c'est-à-dire, lorsque la durée T" est supérieure ou égale à Dₘᵢₙ, le module de commande de cellule 66 commande tous les modules de commutation 132, 142 en configuration passante lors de l'étape S330, correspondant à l'instant Q de la figure 2. Le module de traitement 62 détermine lors d'une étape S332 si la durée de test Dₜ est écoulée. Pour cela, lors de l'étape S332, le module de traitement 62 compare la durée T, mesurée à partir de la commande des modules de commutation 132 et 142 en configuration passante à l'instant Q, à la durée de test Dₜ. Si la durée T est strictement inférieure à la durée de test Dₜ, autrement dit, si la durée de test Dₜ n'est pas écoulée, le module de traitement 62 détecte si un court-circuit est toujours présent, à l'étape S334, en comparant l'intensité I à l'intensité de défaut I_{cc}. Si le module de traitement 62 détermine que l'intensité I est strictement supérieure à l'intensité de défaut I_{cc} alors que la durée de test Dₜ n'est pas écoulée, cela signifie que, malgré le déclenchement du disjoncteur électromécanique 4, le court-circuit n'a pas été isolé. Le module de commande de cellule 66 commande alors le module de commutation 32 en configuration bloquée à l'étape S336. La tension U aux bornes du dispositif est alors égale au palier P3, jusqu'à ce que l'intensité I devienne nulle. La tension U devient alors égale à la tension réseau nominale Uₛ.

Avantageusement, lorsque l'intensité I est devenue nulle suite à l'étape S336, le module de commande de sectionneur 68 active les actionneurs 25 et 26, afin de basculer les sectionneurs 23 et 24 en configuration ouverte. Le dispositif 10 est alors en configuration déclenchée.

Si le module de traitement 62 ne détecte pas de court-circuit à l'étape S334, alors le module de traitement 62 effectue à nouveau l'étape S332 et un fonctionnement itératif est mis en œuvre. Si la durée T est supérieure ou égale à la durée de test Dₜ, autrement dit, si la durée de test Dₜ est écoulée, aucun court-circuit n'ayant été détecté, cela signifie que le déclenchement du disjoncteur électromécanique 4 a permis d'isoler le court-circuit. Cela est représenté à la figure 6, entre les instants Q et R, entre lesquels l'intensité I reste inférieure au seuil de défaut I_{cc}. Le module de commande de cellule 66 maintient alors les modules de commutation 132 et 142 en configuration passante et le module de commande d'interrupteur mécanique 164 commande l'interrupteur mécanique 112 en configuration fermée à l'étape S338. Le dispositif 10 reprend ensuite son fonctionnement normal et effectue à nouveau l'étape S302.

De manière particulièrement avantageuse, lorsque le module de traitement 62 calcule l'énergie de déclenchement E_{d}, si l'intensité I devient sensiblement inférieure à l'intensité minimale Iₘᵢₙ, par exemple égale à 90% du seuil d'intensité minimale Iₘᵢₙ avant que les modules de commutations 132 et 142 soient commandés en configuration bloquée à l'étape S326, alors le module de traitement 62 annule le calcul de l'énergie de déclenchement E_{d}, ou fait décroître l'énergie de déclenchement E_{d}.

En variante non représentée, la source 3 et la charge 5 sont reliées entre elles par plusieurs conducteurs de phase, par exemple trois. Dans ce cas, le dispositif 10 comprend avantageusement, pour chaque conducteur de phase, un interrupteur mécanique et une cellule d'interruption connectée en parallèle de l'interrupteur mécanique.

En variante non représentée, la cellule d'interruption 118 ne comprend qu'un seul module de commutation, par exemple le module de commutation 132. Le procédé de commande du dispositif 100 est alors similaire au procédé de commande du dispositif 10, avec les différences suivantes. Initialement, lorsque le dispositif 100 est en configuration armée, l'interrupteur mécanique 112 est en configuration fermée. Le module de commande d'interrupteur mécanique 164 commande l'interrupteur mécanique 112 en configuration ouverte dès qu'un court-circuit est détecté à l'étape S104. Le module de commande de cellule 66 ne commande le module de commutation 132 à l'étape S116 que si la tenue diélectrique de l'interrupteur mécanique 112 est supérieure ou égale au palier d'écrêtage Pₑ. Si la tenue diélectrique de l'interrupteur mécanique 112 est inférieure au palier d'écrêtage Pₑ, le module de commande de cellule 66 attend que la tenue diélectrique de l'interrupteur mécanique 112 devienne supérieure ou égale au palier d'écrêtage Pₑ pour effectuer l'étape S116. Si, lors de l'étape S124, la durée de test Dₜ est écoulée sans qu'un court-circuit ait été détecté, le module de commande d'interrupteur mécanique 164 commande l'interrupteur mécanique en configuration fermée, puis le dispositif 100 reprend son fonctionnement normal et effectue à nouveau l'étape S302.

De manière optionnelle, un interrupteur mécanique est connecté au conducteur de neutre, une cellule d'interruption étant connectée en parallèle de l'interrupteur mécanique.

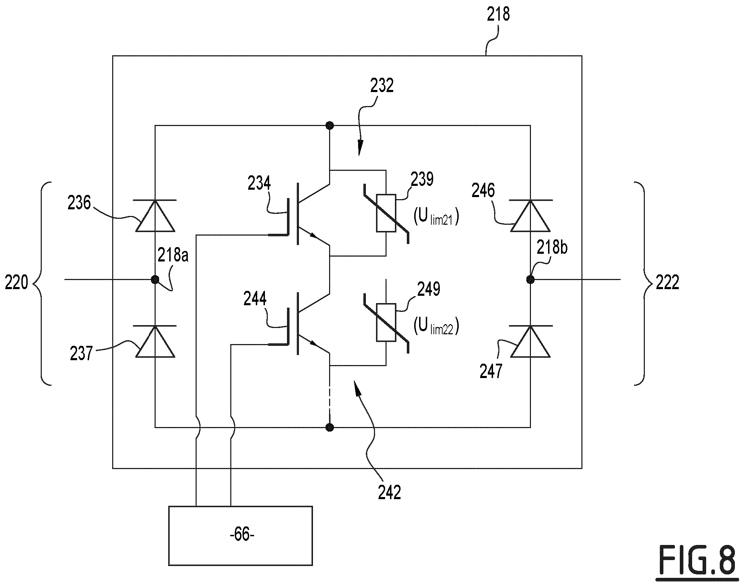

La figure 8 est un schéma d'une cellule d'interruption 218 conforme à un troisième mode de réalisation de l'invention, en tant que variante à la cellule d'interruption 18 ou 118.

Lorsque la cellule d'interruption 218 est intégrée au dispositif 10, elle remplace la cellule d'interruption 18 et est connectée en série au conducteur de phase 7 par une entrée 218a et une sortie 218b.

Lorsque la cellule d'interruption 218 est intégrée à un dispositif 100, la cellule d'interruption 218 replace la cellule d'interruption 118. Dans ce cas, la cellule d'interruption 218 est, de manière similaire à la cellule d'interruption 118, connectée en parallèle de l'interrupteur mécanique 112, de telle sorte que l'entrée 112a et la sortie 112b de l'interrupteur mécanique 112 sont connectées respectivement à l'entrée 218a et à la sortie 218b de la cellule d'interruption 218. Plus spécifiquement, l'entrée 112a de l'interrupteur mécanique 112 et l'entrée 218a de la cellule d'interruption 218 sont connectées par la liaison électrique 119a, non interruptible, et la sortie 112b de l'interrupteur mécanique 112 est connectée à la sortie 218b de la cellule d'interruption 218 par la liaison électrique 119b également non interruptible.

La cellule d'interruption 218 comprend deux branches de redressement 220 et 222. Chaque branche de redressement 220 et 222 comprend deux diodes, respectivement 236 et 237 pour la branche de redressement 220, et 246 et 247 pour la branche de redressement 222. Les diodes 236 et 237 sont connectées en anti-série l'une par rapport à l'autre, c'est-à-dire que les diodes 236 et 237 sont connectées en série et ne conduisent jamais le courant en même temps. Il en est de même pour les diodes 246 et 247.

L'entrée 218a et la sortie 218b de la cellule d'interruption 218 correspondent respectivement au point milieu de la branche de redressement 220, entre les diodes 236 et 237 et au point milieu de la branche de redressement 222, entre les diodes 246 et 247. Ainsi, la cellule d'interruption 218 est connectée en parallèle de l'interrupteur mécanique 112 par le point milieu de chaque branche de redressement 220 et 222.

La cellule d'interruption 218 comprend deux modules d'interruption 232 et 242. Les modules d'interruption 232 et 242 sont connectés en parallèle des branches de redressement 220 et 222 et en série l'un à l'autre. En variante, la cellule d'interruption 218 comprend plus de deux modules d'interruption, connectés en série avec le module d'interruption 242 et en parallèle des branches 220 et 222, ainsi que symbolisé par la ligne en pointillés à la figure 8.

Les modules d'interruption 232 et 242 comprennent respectivement un élément semi-conducteur commandable en commutation, qui est ici un transistor 234 et 244, et un élément de limitation de tension 239 et 249. L'élément de limitation de tension 239 est connecté en parallèle du transistor 234 et l'élément de limitation de tension 249 est connecté en parallèle du transistor 244. Les éléments de limitation de tension 239 et 249 sont similaires, au moins fonctionnellement, aux éléments de limitation de tension 139 et 149 et ont une tension de limitation Uₗᵢₘ₂₁ et Uₗᵢₘ₂₂ respectivement. La tension de limitation Uₗᵢₘ₂₁ est différente de la tension de limitation Uₗᵢₘ₂₂ et ces tensions forment trois paliers, de manière similaire aux tensions de limitation Uₗᵢₘ₁₁ et Uₗᵢₘ₁₂.

La cellule d'interruption 218 est configurée pour recevoir du courant alternatif et pour le convertir en courant continu grâce aux diodes 236, 237, 246 et 247, de telle sorte que du courant continu circule dans les modules de commutation 232 et 242. La disposition des diodes 236, 237, 246 et 247 permet de limiter le nombre de diodes dans la cellule d'interruption 218 à quatre. Ainsi, même lorsque la cellule d'interruption 218 comprend plus de deux modules de commutation, seules les quatre diodes 236, 237, 246 et 247 sont nécessaires à leur fonctionnement, limitant ainsi le nombre de diodes nécessaires par rapport à la cellule d'interruption 118.

Le procédé de commande du dispositif de protection 10 comprenant une cellule d'interruption 218 et le procédé de commande du dispositif de protection 100 comprenant une cellule d'interruption 218 sont similaires à ceux décrits respectivement pour le dispositif de protection 10 comprenant la cellule d'interruption 18 et pour le dispositif de protection 100 comprenant la cellule d'interruption 118 et ne sont pas à nouveau décrits en détail.

En variante non représentée applicable à tous les modes de réalisation, l'installation électrique 1 ne comprend pas de conducteur de neutre 8.

Toute caractéristique décrite pour un mode de réalisation ou une variante dans ce qui précède peut être mise en œuvre pour les autres modes de réalisation et variantes décrits précédemment, dans la mesure où elle est couverte par le jeu de revendications et pour autant que techniquement faisable.

## Revendications

1. Procédé de commande d'un dispositif (10 ; 100) de protection électrique, configuré pour être connecté entre une source (3) et un disjoncteur électromécanique (4), le dispositif (10 ; 100) comprenant :
- une cellule d'interruption (18 ; 118 ; 218), comprenant au moins un module de commutation (32 ; 132, 142 ; 232, 242), chaque module de commutation (32 ; 132, 142 ; 232, 242) comprenant :
∘ au moins un élément semi-conducteur (34, 35 ; 134, 135, 144, 145 ; 234, 244) ; et
∘ un élément de limitation de tension (39 ; 139, 149 ; 239, 249), connecté en parallèle de l'au moins un élément semi-conducteur (34, 35 ; 134, 135, 144, 145 ; 234, 244), l'élément de limitation de tension (39 ; 139, 149 ; 239, 249) ayant une tension de limitation (Uₗᵢₘ₁ ; Uₗᵢₘ₁₁, Uₗᵢₘ₁₂ ; Uₗᵢₘ₂₁, Uₗᵢₘ₂₂), la ou les tensions de limitation, seules et/ou sommées entre elles, formant un ou une pluralité de paliers distincts (P1, P2, P3),
chaque module de commutation (32 ; 132, 142 ; 232, 242) étant configuré pour basculer entre une configuration passante, dans laquelle un courant circulant entre la source (3) et le disjoncteur électromécanique (4) circule dans le ou dans l'un des éléments semi-conducteurs (34, 35 ; 134, 135, 144, 145 ; 234, 244), et une configuration bloquée, dans laquelle si le courant circule dans le module de commutation (32 ; 132, 142 ; 232, 242), il circule dans l'élément de limitation (39 ; 139, 149 ; 239, 249) ;
- un capteur de courant (52), configuré pour mesurer une intensité (I) du courant ;
- une unité de contrôle (60 ; 160) comprenant un module de traitement (62), et un module de commande de cellule (66), configuré pour commander chaque module de commutation (32 ; 132, 142 ; 232, 242) dans la configuration passante et dans la configuration bloquée,
le procédé comprenant au moins les étapes suivantes :
a) mesure (S102 ; S302) de l'intensité (I) du courant par le capteur de courant (52) ;
b) détection (S104 ; S304) d'un défaut électrique de type court-circuit par le module de traitement (62), en fonction de l'intensité (I) mesurée par le capteur de courant (52) ;
**caractérisé en ce que** le procédé comprend, en outre, les étapes successives suivantes :
c) lorsqu'un défaut électrique de type court-circuit est détecté par le module de traitement à l'étape b), lorsque l'intensité (I) mesurée par le capteur (52) est inférieure ou égale à un seuil d'intensité minimale (Iₘᵢₙ) et qu'une énergie de déclenchement (E_{d}) reçue par le disjoncteur électromécanique (4) est strictement inférieure à un seuil d'énergie (Eₜₕ), l'énergie de déclenchement (E_{d}) étant calculée par le module de traitement (62) en fonction de l'intensité (I) mesurée par le capteur de courant (52), commander (S114 ; S322) en configuration passante le ou les modules de commutation (32 ; 132, 142 ; 232, 242) dont les tensions de limitation (Uₗᵢₘ, ; Uₗᵢₘ₁₁, Uₗᵢₘ₁₂ ; Uₗᵢₘ₂₁, Uₗᵢₘ₂₂) des éléments de limitation (39 ; 139, 149 ; 239, 249) forment le palier d'écrêtage (Pₑ) par le module de commande de cellule (66) ;
d) lorsqu'un défaut électrique de type court-circuit est détecté par le module de traitement à l'étape b), lorsque l'intensité (I) mesurée par le capteur (52) atteint un seuil d'intensité maximale (Iₘₐₓ) et que l'énergie de déclenchement (E_{d}) calculée par le module de traitement (62) est strictement inférieure au seuil d'énergie (Eₜₕ), commander (S116 ; S324) en configuration bloquée le ou les modules de commutation (32 ; 132, 142 ; 232, 242) dont les tensions de limitation (Uₗᵢₘ₁ ; Uₗᵢₘ₁₁, Uₗᵢₘ₁₂ ; Uₗᵢₘ₂₁, Uₗᵢₘ₂₂) des éléments de limitation (39 ; 139, 149 ; 239, 249) forment le palier d'écrêtage (Pₑ) par le module de commande de cellule (66) ; et
e) lorsque l'énergie de déclenchement (E_{d}) est supérieure ou égale au seuil d'énergie (Eₜₕ), commander en configuration bloquée chaque module de commutation (32 ; 132, 142 ; 232, 242) par le module de commande de cellule (66), indépendamment de l'intensité (I) mesurée par le capteur (52).

2. Procédé selon la revendication 1, comprenant en outre les étapes successives suivantes :
f) commander (S122 ; S330) chaque module de commutation (32 ; 132, 142 ; 232, 242) en configuration passante, alors que l'énergie de déclenchement (E_{d}) est supérieure ou égale au seuil d'énergie (Eₜₕ) et que chaque module de commutation (32 ; 132, 142 ; 232, 242) a été commandé en configuration bloquée à l'étape e) ; et
g) chaque module de commutation (32 ; 132, 142 ; 232, 242) ayant été commandé en configuration passante à l'étape f), si un court-circuit est détecté alors qu'une durée (T) décomptée à partir d'un moment où chaque module de commutation (32 ; 132, 142 ; 232, 242) est commandé en configuration passante à l'étape g) est inférieure à une durée de test (Dₜ), commander (S128 ; S336) chaque module de commutation (32 ; 132, 142 ; 232, 242) en configuration bloquée.

3. Procédé selon l'une quelconque des revendications 1 et 2, dans lequel le procédé comprend, en outre, l'étape suivante :
h) lorsqu'un défaut électrique de type court-circuit est détecté par le module de traitement (62) à l'étape b), commander en configuration ouverte un interrupteur mécanique (112), connecté en parallèle de la cellule d'interruption (118 ; 218), l'interrupteur mécanique (112) étant configuré pour basculer entre une configuration fermée, dans laquelle l'interrupteur mécanique (112) conduit le courant, et une configuration ouverte, dans laquelle l'interrupteur mécanique (112) ne conduit pas le courant, par un module de commande d'interrupteur mécanique (164) inclus dans l'unité de contrôle (160).

4. Procédé selon les revendications 2 et 3, comprenant en outre l'étape suivante :
i) commander (S338) l'interrupteur mécanique (112) en configuration fermée si, lorsque la durée (T) de l'étape g) est supérieure ou égale à la durée de test (Dₜ), aucun court-circuit n'a été détecté.

5. Procédé selon l'une quelconque des revendications précédentes, dans lequel le dispositif comprend une pluralité de modules de commutation (132, 142 ; 232, 242), connectés les uns aux autres, l'étape d) comprenant en outre une commande en configuration passante des modules de commutation (132, 142 ; 232, 242) dont les tensions de limitation (Uₗᵢₘ₁₁, Uₗᵢₘ₁₂ ; Uₗᵢₘ₂₁, Uₗᵢₘ₂₂) des éléments de limitation (139, 149 ; 239, 249) ne forment pas le palier d'écrêtage (Pₑ), par le module de commande de cellule (66)

6. Dispositif (10 ; 100) de protection électrique, configuré pour être connecté entre une source (3) et un disjoncteur électromécanique (4), le dispositif (10 ; 100) comprenant :
- une cellule d'interruption (18 ; 118 ; 218), comprenant au moins un module de commutation (32 ; 132, 142 ; 232, 242), chaque module de commutation (32 ; 132, 142 ; 232, 242) comprenant :
∘ au moins un élément semi-conducteur (34, 35 ; 134, 135, 144, 145 ; 234, 244) ; et
∘ un élément de limitation de tension (39 ; 139, 149 ; 239, 249), connecté en parallèle de l'au moins un élément semi-conducteur (34, 35 ; 134, 135, 144, 145 ; 234, 244), l'élément de limitation de tension (39 ; 139, 149 ; 239, 249) ayant une tension de limitation (Uₗᵢₘ₁ ; Uₗᵢₘ₁₁, Uₗᵢₘ₁₂ ; Uₗᵢₘ₂₁, Uₗᵢₘ₂₂), la ou les tensions de limitation (Uₗᵢₘ₁ ; Uₗᵢₘ₁₁, Uₗᵢₘ₁₂ ; Uₗᵢₘ₂₁, Uₗᵢₘ₂₂), seules et/ou sommées entre elles, formant un ou une pluralité de paliers (P1, P2, P3) distincts,
chaque module de commutation (32 ; 132, 142 ; 232, 242) étant configuré pour basculer entre une configuration passante, dans laquelle un courant circulant entre la source (3) et le disjoncteur électromécanique (4) circule dans le ou dans l'un des éléments semi-conducteurs (34, 35 ; 134, 135, 144, 145 ; 234, 244), et une configuration bloquée, dans laquelle si le courant circule dans le module de commutation (32 ; 132, 142 ; 232, 242), il circule dans l'élément de limitation (39 ; 139, 149 ; 239, 249) ;
- un capteur de courant (52), configuré pour mesurer une intensité (I) du courant ;
- une unité de contrôle (60 ; 160) comprenant :
∘ un module de traitement (62) configuré pour détecter un défaut électrique de type court-circuit en fonction de l'intensité (I) mesurée par le capteur de courant (52) ; et
∘ un module de commande de cellule (66), configuré pour commander chaque module de commutation (32 ; 132, 142 ; 232, 242) dans la configuration passante et dans la configuration bloquée,
**caractérisé en ce que** le module de traitement (62) est en outre configuré pour calculer une énergie de déclenchement (E_{d}) reçue par le disjoncteur électromécanique (4), en fonction de l'intensité (I) mesurée par le capteur de courant (52),
et **en ce que** le dispositif (10 ; 100) est configuré pour mettre en œuvre le procédé de l'une quelconque des revendications précédentes.

7. Dispositif (10 ; 100) selon la revendication 6, dans lequel chaque module de commutation (32 ; 132, 142) comprend deux éléments semi-conducteurs (34, 35 ; 134, 135, 144, 145) qui sont unidirectionnels en courant et connectés l'un à l'autre en anti-série, et pour chaque élément semi-conducteur (34, 35 ; 134, 135, 144, 145), une diode (36, 37 ; 136, 137, 146, 147) est connectée en anti-parallèle de l'élément semi-conducteur (34, 35 ; 134, 135, 144, 145).

8. Dispositif (10 ; 100) selon la revendication 6, dans lequel :
- la cellule d'interruption (218) comprend deux branches de redressement (220, 222), l'entrée (218a) et la sortie (218b) de la cellule d'interruption (218) formant respectivement un point milieu de l'une des branches de redressement (220, 222), chaque branche de redressement (220, 222) comprenant deux diodes (236, 237, 246, 247) disposées de part et d'autre du point milieu, connectées en anti-série l'une par rapport à l'autre ;
- les modules de commutation (232, 242) sont connectés en parallèle des branches de redressement (220, 222) ; et
- chaque module de commutation (232, 242) comprend un seul élément semi-conducteur (234, 244) connecté en parallèle de l'élément de limitation de tension (239, 249).

9. Dispositif selon la revendication 7, comprenant un unique module de commutation (32), la tension de limitation (Uₗᵢₘ₁) de l'élément de limitation de tension (39) du module de commutation (32) formant alors le palier d'écrêtage (Pₑ).

10. Installation électrique (1) comprenant une source (3), une charge (5), un disjoncteur électromécanique (4), connecté entre la source (3) et la charge (5), le disjoncteur électromécanique (4) étant configuré pour se déclencher lorsqu'il reçoit une énergie de déclenchement (E_{d}) supérieure ou égale à un seuil d'énergie (Eₜₕ), et un dispositif (10 ; 100) selon l'une quelconque des revendications 7 à 9, connecté entre la source (3) et le disjoncteur électromécanique (4).

## Patentansprüche

1. Verfahren zur Steuerung einer elektrischen Schutzvorrichtung (10; 100), die dazu eingerichtet ist, zwischen einer Quelle (3) und einem elektromechanischen Leistungsschalter (4) geschaltet zu werden, wobei die Vorrichtung (10; 100) Folgendes umfasst:
- eine Unterbrechungszelle (18; 118; 218), umfassend mindestens ein Schaltmodul (32; 132, 142; 232, 242), wobei jedes Schaltmodul (32; 132, 142; 232, 242) Folgendes umfasst:
∘ mindestens ein Halbleiterelement (34, 35; 134, 135, 144, 145; 234, 244); und
∘ ein Spannungsbegrenzungselement (39; 139, 149; 239, 249), das parallel zu dem mindestens einen Halbleiterelement (34, 35; 134, 135, 144, 145; 234, 244) geschaltet ist, wobei das Spannungsbegrenzungselement (39; 139, 149; 239, 249) eine Begrenzungsspannung (Uₗᵢₘ₁; Uₗᵢₘ₁₁, Uₗᵢₘ₁₂, Uₗᵢₘ₂₁, Uₗᵢₘ₂₂) aufweist, wobei die eine oder die mehreren Begrenzungsspannungen, einzeln und/oder miteinander summiert, eine oder eine Mehrzahl von unterschiedlichen Stufen (P1, P2, P3) bilden,
wobei jedes Schaltmodul (32; 132, 142; 232, 242) dazu eingerichtet ist, zwischen einer leitenden Konfiguration, in der ein zwischen der Quelle (3) und dem elektromechanischen Leistungsschalter (4) fließender Strom durch das oder eines der Halbleiterelemente (34, 35; 134, 135, 144, 145; 234, 244) fließt, und einer gesperrten Konfiguration umzuschalten, in der, wenn der Strom durch das Schaltmodul (32; 132, 142; 232, 242) fließt, er durch das Begrenzungselement (39; 139, 149; 239, 249) fließt;
- einen Stromsensor (52), der dazu eingerichtet ist, eine Stromstärke (I) des Stroms zu messen;
- eine Steuereinheit (60; 160), umfassend ein Verarbeitungsmodul (62) und ein Zellsteuermodul (66), das dazu eingerichtet ist, jedes Schaltmodul (32; 132, 142; 232, 242) in der leitenden Konfiguration und in der gesperrten Konfiguration zu steuern,
wobei das Verfahren mindestens die folgenden Schritte Folgendes umfasst:
a) Messen (S102; S302) der Stromstärke (I) des Stroms durch den Stromsensor (52);
b) Erkennen (S104; S304) eines elektrischen Fehlers vom Typ Kurzschluss durch das Verarbeitungsmodul (62) in Abhängigkeit von der durch den Stromsensor (52) gemessenen Stromstärke (I);
**dadurch gekennzeichnet, dass** das Verfahren ferner die folgenden aufeinanderfolgenden Schritte umfasst:
c) wenn ein elektrischer Fehler vom Typ Kurzschluss durch das Verarbeitungsmodul in Schritt b) erkannt wird, wenn die durch den Sensor (52) gemessene Stromstärke (I) kleiner oder gleich einem Mindeststromstärkeschwellenwert (Iₘᵢₙ) ist und eine durch den elektromechanischen Leistungsschalter (4) empfangene Auslöseenergie (E_{d}) strikt kleiner als ein Energieschwellenwert (Eₜₕ) ist, wobei die Auslöseenergie (E_{d}) durch das Verarbeitungsmodul (62) in Abhängigkeit von der durch den Stromsensor (52) gemessenen Stromstärke (I) berechnet wird, Steuern (S114; S322) des oder der Schaltmodule (32; 132, 142; 232, 242), deren Begrenzungsspannungen (Uₗᵢₘ₁; Uₗᵢₘ₁₁, Uₗᵢₘ₁₂; Uₗᵢₘ₂₁, Uₗᵢₘ₂₂) der Begrenzungselemente (39; 139, 149; 239, 249) die Begrenzungsstufe (Pₑ) bilden, in die leitende Konfiguration durch das Zellsteuermodul (66);
d) wenn ein elektrischer Fehler vom Typ Kurzschluss durch das Verarbeitungsmodul in Schritt b) erkannt wird, wenn die durch den Sensor (52) gemessene Stromstärke (I) einen Höchststromstärkeschwellenwert (Iₘₐₓ) erreicht und die durch das Verarbeitungsmodul (62) berechnete Auslöseenergie (E_{d}) strikt kleiner als der Energieschwellenwert (Eₜₕ) ist, Steuern (S116; S324) des oder der Schaltmodule (32; 132, 142; 232, 242), deren Begrenzungsspannungen (Uₗᵢₘ₁; Uₗᵢₘ₁₁, Uₗᵢₘ₁₂; Uₗᵢₘ₂₁, Uₗᵢₘ₂₂) der Begrenzungselemente (39; 139, 149; 239, 249) die Begrenzungsstufe (Pₑ) bilden, in die gesperrte Konfiguration durch das Zellsteuermodul (66); und
e) wenn die Auslöseenergie (E_{d}) größer oder gleich dem Energieschwellenwert (Eₜₕ) ist, Steuern jedes Schaltmoduls (32; 132, 142; 232, 242) in die gesperrte Konfiguration durch das Zellsteuermodul (66), unabhängig von der durch den Sensor (52) gemessenen Stromstärke (I).

2. Verfahren nach Anspruch 1, ferner umfassend die folgenden aufeinanderfolgenden Schritte:
f) Steuern (S122; S330) jedes Schaltmoduls (32; 132, 142; 232, 242) in die leitende Konfiguration, während die Auslöseenergie (E_{d}) größer oder gleich dem Energieschwellenwert (Eₜₕ) ist und jedes Schaltmodul (32; 132, 142; 232, 242) in Schritt e) in die gesperrte Konfiguration gesteuert worden ist; und
g) wobei jedes Schaltmodul (32; 132, 142; 232, 242) in Schritt f) in die leitende Konfiguration gesteuert worden ist, wenn ein Kurzschluss erkannt wird, während eine ab einem Zeitpunkt, an dem jedes Schaltmodul (32; 132, 142; 232, 242) in Schritt g) in die leitende Konfiguration gesteuert wird, abgezählte Dauer (T) kleiner als eine Testdauer (Dₜ) ist, Steuern (S128; S336) jedes Schaltmoduls (32; 132, 142; 232, 242) in die gesperrte Konfiguration.

3. Verfahren nach einem der Ansprüche 1 und 2, wobei das Verfahren ferner den folgenden Schritt umfasst:
h) wenn ein elektrischer Fehler vom Typ Kurzschluss durch das Verarbeitungsmodul (62) in Schritt b) erkannt wird, Steuern eines mechanischen Schalters (112), der parallel zu der Unterbrechungszelle (118; 218) geschaltet ist, in eine offene Konfiguration, wobei der mechanische Schalter (112) dazu eingerichtet ist, zwischen einer geschlossenen Konfiguration, in der der mechanische Schalter (112) den Strom leitet, und einer offenen Konfiguration umzuschalten, in der der mechanische Schalter (112) den Strom nicht leitet, durch ein in der Steuereinheit (160) enthaltenes Steuermodul für den mechanischen Schalter (164).

4. Verfahren nach den Ansprüchen 2 und 3, ferner umfassend den folgenden Schritt:
i) Steuern (S338) des mechanischen Schalters (112) in die geschlossene Konfiguration, wenn, sobald die Dauer (T) von Schritt g) größer oder gleich der Testdauer (Dₜ) ist, kein Kurzschluss erkannt worden ist.

5. Verfahren nach einem der vorhergehenden Ansprüche, wobei die Vorrichtung eine Mehrzahl von miteinander verbundenen Schaltmodulen (132, 142; 232, 242) umfasst, wobei Schritt d) ferner ein Steuern der Schaltmodule (132, 142; 232, 242), deren Begrenzungsspannungen (Uₗᵢₘ₁₁, Uₗᵢₘ₁₂, Uₗᵢₘ₂₁, Uₗᵢₘ₂₂) der Begrenzungselemente (139, 149; 239, 249) nicht die Begrenzungsstufe (Pₑ) bilden, in die leitende Konfiguration durch das Zellsteuermodul (66) umfasst.

6. Elektrische Schutzvorrichtung (10; 100), die dazu eingerichtet ist, zwischen einer Quelle (3) und einem elektromechanischen Leistungsschalter (4) geschaltet zu werden, wobei die Vorrichtung (10; 100) Folgendes umfasst:
- eine Unterbrechungszelle (18; 118; 218), umfassend mindestens ein Schaltmodul (32; 132, 142; 232, 242), wobei jedes Schaltmodul (32; 132, 142; 232, 242) Folgendes umfasst:
∘ mindestens ein Halbleiterelement (34, 35; 134, 135, 144, 145; 234, 244); und
∘ ein Spannungsbegrenzungselement (39; 139, 149; 239, 249), das parallel zu dem mindestens einen Halbleiterelement (34, 35; 134, 135, 144, 145; 234, 244) geschaltet ist, wobei das Spannungsbegrenzungselement (39; 139, 149; 239, 249) eine Begrenzungsspannung (Uₗᵢₘ₁; Uₗᵢₘ₁₁, Uₗᵢₘ₁₂, Uₗᵢₘ₂₁, Uₗᵢₘ₂₂) aufweist, wobei die eine oder die mehreren Begrenzungsspannungen (Uₗᵢₘ₁ ; Uₗᵢₘ₁₁, Uₗᵢₘ₁₂ ; Uₗᵢₘ₂₁, Uₗᵢₘ₂₂), einzeln und/oder miteinander summiert, eine oder eine Mehrzahl von unterschiedlichen Stufen (P1, P2, P3) bilden,
wobei jedes Schaltmodul (32; 132, 142; 232, 242) dazu eingerichtet ist, zwischen einer leitenden Konfiguration, in der ein zwischen der Quelle (3) und dem elektromechanischen Leistungsschalter (4) fließender Strom durch das oder eines der Halbleiterelemente (34, 35; 134, 135, 144, 145; 234, 244) fließt, und einer gesperrten Konfiguration umzuschalten, in der, wenn der Strom durch das Schaltmodul (32; 132, 142; 232, 242) fließt, er durch das Begrenzungselement (39; 139, 149; 239, 249) fließt;
- einen Stromsensor (52), der dazu eingerichtet ist, eine Stromstärke (I) des Stroms zu messen;
- eine Steuereinheit (60; 160), umfassend:
∘ ein Verarbeitungsmodul (62), das dazu eingerichtet ist, einen elektrischen Fehler vom Typ Kurzschluss in Abhängigkeit von der durch den Stromsensor (52) gemessenen Stromstärke (I) zu erkennen; und
∘ ein Zellsteuermodul (66), das dazu eingerichtet ist, jedes Schaltmodul (32; 132, 142; 232, 242) in der leitenden Konfiguration und in der gesperrten Konfiguration zu steuern,
**dadurch gekennzeichnet, dass** das Verarbeitungsmodul (62) ferner dazu eingerichtet ist, eine von dem elektromechanischen Leistungsschalter (4) empfangene Auslöseenergie (E_{d}) in Abhängigkeit von der durch den Stromsensor (52) gemessenen Stromstärke (I) zu berechnen,
und **dadurch gekennzeichnet, dass** die Vorrichtung (10 ; 100) dazu eingerichtet ist, das Verfahren nach einem der vorhergehenden Ansprüche umzusetzen.

7. Vorrichtung (10 ; 100) nach Anspruch 6, wobei jedes Schaltmodul (32 ; 132, 142) zwei Halbleiterelemente (34, 35 ; 134, 135, 144, 145) umfasst, die strommäßig unidirektional sind und antiseriell miteinander verbunden sind, und für jedes Halbleiterelement (34, 35 ; 134, 135, 144, 145) eine Diode (36, 37 ; 136, 137, 146, 147) antiparallel zu dem Halbleiterelement (34, 35 ; 134, 135, 144, 145) verbunden ist.

8. Vorrichtung (10 ; 100) nach Anspruch 6, wobei:
- die Unterbrechungszelle (218) zwei Gleichrichterzweige (220, 222) umfasst, wobei der Eingang (218a) und der Ausgang (218b) der Unterbrechungszelle (218) jeweils einen Mittelpunkt eines der Gleichrichterzweige (220, 222) bilden, wobei jeder Gleichrichterzweig (220, 222) zwei Dioden (236, 237, 246, 247) umfasst, die auf beiden Seiten des Mittelpunkts angeordnet und in Bezug aufeinander antiseriell verbunden sind;
- die Schaltmodule (232, 242) parallel zu den Gleichrichterzweigen (220, 222) verbunden sind; und
- jedes Schaltmodul (232, 242) ein einziges Halbleiterelement (234, 244) umfasst, das parallel zu dem Spannungsbegrenzungselement (239, 249) verbunden ist.

9. Vorrichtung nach Anspruch 7, umfassend ein einziges Schaltmodul (32), wobei die Begrenzungsspannung (Uₗᵢₘ₁) des Spannungsbegrenzungselements (39) des Schaltmoduls (32) dann das Begrenzungsstufe (Pₑ) bildet.

10. Elektrische Anlage (1), umfassend eine Quelle (3), eine Last (5), einen elektromechanischen Leistungsschalter (4), der zwischen der Quelle (3) und der Last (5) verbunden ist, wobei der elektromechanische Leistungsschalter (4) dazu eingerichtet ist, auszulösen, wenn er eine Auslöseenergie (E_{d}) empfängt, die größer als oder gleich einem Energieschwellenwert (Eₜₕ) ist, und eine Vorrichtung (10 ; 100) nach einem der Ansprüche 7 bis 9, die zwischen der Quelle (3) und dem elektromechanischen Leistungsschalter (4) verbunden ist.

## Claims

1. A method for controlling an electrical protection device (10; 100) configured to be connected between a source (3) and an electromechanical circuit breaker (4), the device (10; 100) comprising:
- an interruption cell (18; 118; 218), comprising at least one switching module (32; 132, 142; 232, 242), each switching module (32; 132, 142; 232, 242) comprising:
∘ at least one semiconductor element (34, 35; 134, 135, 144, 145; 234, 244); and
∘ a voltage limiting element (39; 139, 149; 239, 249), connected in parallel with the at least one semiconductor element (34, 35; 134, 135, 144, 145; 234, 244), the voltage limiting element (39139, 149; 239, 249) having a limiting voltage (Uₗᵢₘ₁; Uₗᵢₘ₁₁, Uₗᵢₘ₁₂; Uₗᵢₘ₂₁, Uₗᵢₘ₂₂), the limiting voltage or voltages, alone and/or summed together, forming one or a plurality of distinct levels (P1, P2, P3),
each switching module (32; 132, 142; 232, 242) being configured to switch between an on-configuration, wherein a current flowing between the source (3) and the electromechanical circuit breaker (4) flows through the or one of the semiconductor elements (34, 35; 134, 135, 144, 145; 234, 244), and an off-configuration, wherein if the current flows through the switching module (32; 132, 142; 232, 242), it flows through the limiting element (39; 139, 149; 239, 249);
- a current sensor (52), configured to measure a current intensity (I);
- a control unit (60; 160) comprising a processing module (62) and a cell control module (66), configured to control each switching module (32; 132; 142; 232; 242) in the on-configuration and in the off-configuration,
the method comprising at least the following steps:
a) measuring (S102; S302) the intensity (I) of the current, by the current sensor (52);
b) detecting (S104; S304) an electrical fault of the short-circuit type, by the processing module (62), as a function of the intensity (I) measured by the current sensor (52);
**characterised in that** the method further comprises the following successive steps:
c) when an electrical fault of the short-circuit type is detected by the processing module in step b), when the intensity (I) measured by the sensor (52) is less than or equal to a minimum intensity threshold (Iₘᵢₙ) and a tripping energy (E_{d}) received by the electromechanical circuit breaker (4) is strictly less than an energy threshold (Eₜₕ), the tripping energy (E_{d}) being calculated by the processing module (62) as a function of the intensity (I) measured by the current sensor (52), controlling (S114; S322) the switching module or modules (32; 132, 142; 232, 242) whose limiting voltages (Uₗᵢₘ₁; Uₗᵢₘ₁₁, Uₗᵢₘ₁₂; Uₗᵢₘ₂₁, Uₗᵢₘ₂₂) of the limiting elements (39; 139, 149; 239, 249) form the clipping level (Pₑ) to enter the on-configuration, by means of the cell control module (66);
d) when an electrical fault of the short-circuit type is detected by the processing module in step b), when the current (I) measured by the sensor (52) reaches a maximum intensity threshold (Iₘₐₓ) and the tripping energy (E_{d}) calculated by the processing module (62) is strictly less than the energy threshold (Eₜₕ), controlling (S116; S324) the switching module(s) (32; 132, 142; 232, 242) whose limiting voltages (Uₗᵢₘ₁; Uₗᵢₘ₁₁, Uₗᵢₘ₁₂; Uₗᵢₘ₂₁, Uₗᵢₘ₂₂) of the limiting elements (39; 139, 149; 239, 249) form the clipping level (Pₑ) to enter the off-configuration, by means of the cell control module (66); and
e) when the tripping energy (E_{d}) is greater than or equal to the energy threshold (Eₜₕ), controlling each switching module (32; 132, 142; 232, 242) into the off-configuration, by means of the cell control module (66), regardless of the intensity (I) measured by the sensor (52).

2. The method according to claim 1, further comprising the following successive steps:
f) controlling (S122; S330) each switching module (32; 132, 142; 232, 242) to enter the on-configuration, while the trigger energy (E_{d}) is greater than or equal to the energy threshold (Eₜₕ) and each switching module (32; 132, 142; 232, 242) has been controlled to enter the off-configuration in step e); and
g) each switching module (32; 132, 142; 232, 242) having been controlled to enter the on-configuration in step f), if a short-circuit is detected while a duration (T) counted from a moment when each switching module (32; 132, 142; 232, 242) is controlled to enter the on-configuration in step g) is less than a test duration (Dt), controlling (S128; S336) each switching module (32; 132, 142; 232, 242) to enter the off-configuration.

3. The method according to any one of the claims 1 and 2, wherein the method further comprises the following step:
h) when an electrical fault of the short-circuit type is detected by the processing module (62) in step b), controlling a mechanical switch (112), connected in parallel with the interruption cell (118; 218), to enter an open configuration, the mechanical switch (112) being configured to switch between a closed configuration, wherein the mechanical switch (112) conducts the current, and the open configuration, wherein the mechanical switch (112) does not conduct the current, by a mechanical switch control module (164) included in the control unit (160).

4. The method according to claims 2 and 3, further comprising the following steps:
i) controlling the mechanical switch (112) to enter the closed configuration if, when the duration (T) of step g) is greater than or equal to the test duration (Dt), no short-circuit has been detected.

5. The method according to any one of the preceding claims, wherein the device comprises a plurality of switching modules (132, 142; 232, 242), connected to each other, step d) further comprising the controlling of the switching modules (132, 142232, 242) whose limiting voltages (Uₗᵢₘ₁₁, Uₗᵢₘ₁₂; Uₗᵢₘ₂₁, Uₗᵢₘ₂₂) of the limiting elements (139, 149; 239, 249) do not form the clipping step (Pₑ), to enter the on-configuration, by means of the cell control module (66).

6. An electrical protection device (10; 100) configured to be connected between a source (3) and an electromechanical circuit breaker (4), the device (10; 100) comprising:
- an interruption cell (18; 118; 218), comprising at least one switching module (32; 132, 142; 232, 242), each switching module (32; 132, 142; 232, 242) comprising:
∘ at least one semiconductor element (34, 35; 134, 135, 144, 145; 234, 244); and
∘ a voltage limiting element (39; 139, 149; 239, 249), connected in parallel with the at least one semiconductor element (34, 35; 134, 135, 144, 145; 234, 244), the voltage limiting element (39139, 149; 239, 249) having a limiting voltage (Uₗᵢₘ₁; Uₗᵢₘ₁₁, Uₗᵢₘ₁₂; Uₗᵢₘ₂₁, Uₗᵢₘ₂₂), the limiting voltage or voltages (Uₗᵢₘ₁; Uₗᵢₘ₁₁, Uₗᵢₘ₁₂; Uₗᵢₘ₂₁, Uₗᵢₘ₂₂), alone and/or summed together, forming one or a plurality of distinct levels (P1, P2, P3),
each switching module (32; 132, 142; 232, 242) being configured to switch between an on-configuration, wherein a current flowing between the source (3) and the electromechanical circuit breaker (4) flows through the or one of the semiconductor elements (34, 35; 134, 135, 144, 145; 234, 244), and an off-configuration, wherein if the current flows through the switching module (32; 132, 142; 232, 242), it flows through the limiting element (39; 139, 149; 239, 249);
- a current sensor (52), configured to measure a current intensity (I);
- a control unit (60; 160) comprising:
∘ a processing module (62) configured to detect an electrical fault of the short circuit type as a function of the intensity (I) measured by the current sensor (52) ; and
∘ a cell control module (66), configured to control each switching module (32; 132, 142; 232, 242) to enter the on-configuration and the off-configuration,
**characterized in that** the processing module (62) is further configured to calculate a tripping energy (E_{d}) received by the electromechanical circuit breaker (4), as a function of the intensity (I) measured by the current sensor (52),
and **in that** the device (10; 100) being configured to implement the method of any one of the preceding claims.

7. The device (10; 100) according to claim 6, wherein each switching module (32; 132, 142) comprises two semiconductor elements (34, 35; 134, 135, 144, 145) which are unidirectional in current and connected to each other in series with opposite orientations, and for each semiconductor element (34, 35; 134, 135, 144, 145) a diode (36, 37; 136, 137, 146, 147) is connected in parallel with opposite orientations to the semiconductor element (34, 35; 134, 135, 144, 145).

8. The device (10; 100) according to claim 6, wherein:
- the interruption cell (218) comprises two rectifying branches (220, 222), the input (218a) and the output (218b) of the interruption cell (218) respectively forming a midpoint of one of the rectifying branches (220, 222), each rectifying branch (220, 222) comprising two diodes (236, 237, 246, 247) arranged on either side of the midpoint, connected in series to each other with opposite orientations;
- the switching modules (232, 242) are connected in parallel to the rectifying branches (220, 222); and
- each switching module (232, 242) comprises a single semiconductor element (234, 244) connected in parallel to the voltage limiting element (239, 249).

9. The device according to claim 7, comprising a single switching module (32), the limiting voltage (Uₗᵢₘ₁) of the voltage limiting element (39) of the switching module (32) then forming the clipping level (Pₑ).

10. An electrical installation (1) comprising a source (3), a load (5), an electromechanical circuit breaker (4) connected between the source (3) and the load (5), the electromechanical circuit breaker (4) being configured to trip when it receives a tripping energy (E_{d}) greater than or equal to an energy threshold (Eₜₕ), and a device (10; 100) according to any one of claims 7 to 9, connected between the source (3) and the electromechanical circuit breaker (4).
